# EUROPÄISCHE PATENTSCHRIFT

(11) **EP 2 504 372 B1**
(45) Veröffentlichungstag und Bekanntmachung des Hinweises auf die Patenterteilung: **07.01.2015**
(21) Anmeldenummer: 10778673.3
(22) Anmeldetag: 22.11.2010
(51) Int. Cl.: C08G 18/20, C08G 18/62, C08G 18/79, C09D 175/04

(54) **KATALYSATOREN FÜR POLYURETHANBESCHICHTUNGSMASSEN**
CATALYSTS FOR POLYURETHANE COATING COMPOUNDS
CATALYSEURS POUR DES MASSES DE REVÊTEMENT À BASE DE POLYURÉTHANE

(30) Priorität: 23.11.2009 EP 09176785
(43) Veröffentlichungstag der Anmeldung: 03.10.2012
(73) Patentinhaber: BASF SE, 67056 Ludwigshafen (DE)
(72) Erfinder: NEU, Oliver, 67240 Bobenheim-Roxheim (DE); SIEMER, Michael, 68159 Mannheim (DE); ALTENHOFF, Ansgar Gereon, 69117 Heidelberg (DE); SCHÄFER, Harald, 68219 Mannheim (DE); STEINBRECHER, Angelika Maria, 70193 Stuttgart (DE)
(86) Internationale Anmeldenummer: PCT/EP2010/067876
(87) Internationale Veröffentlichungsnummer: WO 2011/061314

(56) Entgegenhaltungen:
- WO-A1-2008/076303
- WO-A1-2009/010502
- DE-A1-102005 057 853
- DE-A1-102008 026 341
- US-A1- 2005 137 298

## Beschreibung

Die vorliegende Erfindung betrifft neue Katalysatoren zur Härtung von Beschichtungsmassen aus lösungsmittelbasierten 2-Komponenten Polyurethanlacken.

Um die Aushärtung von Beschichtungsmassen für Polyurethanlacke zu beschleunigen, können diesen eine Vielzahl von Metall-, insbesondere Schwermetallverbindungen als Katalysatoren für die Reaktion von Isocyanat- und Polyol-Gruppen zugegeben werden. Für diese wird aus Gründen der Toxikologie und/oder der Arbeits- und Gesundheitshygiene ein Ersatz gesucht. Toxikologisch kritisch sind insbesondere zinnorganische Verbindungen, besonders Dialkylzinn-Verbindungen, insbesondere Dibutyldizinndilaurat (DBTL).

WO 2008/076302 beschreibt strahlenhärtbare Beschichtungsmassen, enthaltend Polyurethanacrylatoligomere, erhalten durch Umsetzung von Isocyanaten mit Alkoholen. Als Katalysatoren erwähnt sind innerhalb langer Listen auch Imidazoliumsalze wie 1-Butyl-3-methylimidazolium acetat. Explizites wird in den Beispielen Dibutylzinndilaurat eingesetzt. Die gezielte Substitution toxischer Lewis-Säuren wie Dibutylzinndilaurat und das Erzielen eines bevorzugten Härtungsverhaltens von Isocyanaten mit Polyolen werden nicht beschrieben. Zudem wird lediglich die Herstellung von Polyurethan-Präpolymeren beschrieben, nicht jedoch die Härtung von Polyurethanlacken. Einen ähnlichen Offenbarungsgehalt hat die WO 2008/133668, in der ebenfalls Polyurethan-Präpolymere aus Polyisocyanaten und Polyalkylenglykolen mit einem Mn von 300 bis 5000 beschrieben werden.

WO 2007/090755 und WO 2009/010502 beschreiben Polyurethane, die mit Ionischen Flüssigkeiten wie z.B. Ethylmethylimidazolium ethylsulfat antistatisch ausgestaltet werden. Ethylmethylimidazolium ethylsulfat als Ionische Flüssigkeit fungiert hier ausschließlich als Antistatikum, um die Leitfähigkeit des Polymeren zu erhöhen. Davon funktionell und inhaltlich gesondert werden übliche Katalysatoren zur Umsetzung von Polyisocyanat und Polyol zu Polyurethanen aufgeführt. Ethylmethylimidazolium ethylsulfat ist zwar bei der Bildung des Polyurethans anwesend, es gibt jedoch keinen Hinweis auf eine eventuelle katalytische Wirkung bei der Herstellung von Polyurethanen, und insbesonders keinen Bezug auf Lacke oder Lackeigenschaften.

WO 2003/093246 beschreibt ionische Flüssigkeiten aus Ammonium- oder Phosphonium-Kationen und einem Anion eines fünfgliedrigen Stickstoffheteroaromaten als Lösungsmittel und Katalysator für die Oligomerisierung von Isocyanaten. Dabei werden monomere Isocyanate mit sich selber in einer Cyclisierungsreaktion zu ihren Oligomeren, Dimeren (Uretdion) und Trimeren (Isocyanurat, Iminooxadiazindion) umgesetzt. Stickstoffheteroaromatkationen als Komponente ionischer Flüssigkeiten werden nicht beschrieben. Ähnlich beschreibt EP 1389221 den Einsatz von Triazolatstrukturen für die Umsetzung von Isocyanatgruppen mit anderen Isocyanatgruppen.

WO 2006/084880 beschreibt die zumindest teilweise Oligomerisierung von Diisocyanaten zur Herstellung von Isocyanurat-, Biuret- oder Allophanat-Gruppen enthaltenden Polyisocyanaten, in Gegenwart mindestens eines Oligomerisierungskatalysators, bei dem es sich um eine ionische Flüssigkeit handelt, unter anderem auch Imidazolium-Kationen. Eine Eignung als Urethanisierungskatalysatoren, respektive Vorteile beim Härtungsprozess von Polyisocyanaten und Polyolen in einer Lackanwendung, oder Lackanwendungen als solche werden nicht beschrieben.

WO 2007/062953 beansprucht wässrige Harzdispersionen erhältlich durch Umsetzung von hydroxygruppenhaltigen Keton-, Keton/Aldehyd-, Harnstoff/Aldehyd-Harzen oder deren hydrierten Folgeprodukten und mindestens einem Di- oder Polyisocyanat und mindestens einer Ionischen Flüssigkeit, die eine gegenüber Isocyanatgruppen reaktionsfähige Funktion aufweist und zusätzliche funktionelle Gruppen besitzt, und anschließender Vermengung des Harzes mit Wasser.

Die einbaubaren Ionischen Flüssigkeiten werden als Emulgatoren eingesetzt und dienen der Funktionalisierung sowie zur Überführung von organischen Harzen in stabile wässrige Lösungen, Verdünnungen und Dispersionen.

Funktional davon getrennt und unterschieden werden übliche Katalysatoren zur Umsetzung der obigen Komponenten offenbart.

Es gibt keinen Hinweis auf eine mögliche katalytische Wirkung der Ionischen Flüssigkeiten, auf einen Ersatz von toxischen Katalysatoren wie DBTL, oder auf einen möglichen Einsatz in lösungsmittelhaltigen 2-Komponenten Polyurethanlacken mit gutem Härtungsverhalten und guten Lackeigenschaften.

WO 2008/006422 beschreibt den Einsatz Ionischer Flüssigkeiten von Metallsalzen in ionischen Flüssigkeiten als Antistatika in Kunststoffen.

Zur Herstellung von Polyurethanen unter Reaktion von Polyol und Polyisocyanat in Anwesenheit Ionischer Flüssigkeiten wird der übliche Urethanisierungskatalysator Triethylendiamin beschrieben.

Es gibt keinen Hinweis auf eine mögliche katalytische Wirkung der ionischen Flüssigkeiten auf die Urethanisierungsreaktion, oder auf Vorteile bei der Herstellung oder Anwendung in Lacken.

WO 2009/016322 beschreibt einen Prozess zur Herstellung von Urethanen aus Isocyanaten und Hydroxy-Verbindungen in Anwesenheit eines Carbens als Katalysator zur Substitution toxischer Metallkatalysatoren.

Bei der katalytisch aktiven Spezies handelt es sich explizit um Carbene am C2-Kohlenstoff des Imidazolium-Rings, die isoliert oder in situ eingesetzt werden können. Der Einsatz von Imidazoliumsalzen als Katalysator für die Urethanisierungsreaktion, eine Umsetzung von Polyisocyanaten und Polyolen zu Lacken, und optional Vorteile bei der Aushärtung zu Lacken nicht beschrieben

Buchmeiser et al, Eur. J. Inorg. Chem. 2009, 1970-1976 beschreiben den Einsatz von CO₂, Magnesium-, Aluminium-, und Zink-Addukten an N-heterocyclische Carbene als (latente) Katalysatoren in der Polyurethansynthese. Diese Katalysatoren bedürfen eines gesonderten Syntheseschritts und müssen aufwendig unter Stickstoff in einer Glovebox gehandhabt werden, was sie für eine praktische Anwendung disqualifiziert. Zudem erfordern diese Katalysatoren erhöhte Temperaturen, was eine Aushärtung bei Raumtemperatur unmöglich macht.

Buchmeiser et al, Chem Eur. J. 2009, 15, 3103-3109, beschreiben Organo-Zinn-(II)-Addukte an N-heterocyclische Imidazolium-Carbene als ausgeprägt latente (delayedaction) Katalysatoren. In Scheme 2 wird ein Wirkungsmechanismus aufgestellt, der die Carbene als katalytisch aktive Spezies den katalytisch inaktiven Imidazoliumionen gegenüberstellt.

JP 2008201703 beschreibt Imidazoliumsalze zur Verwendung in Medikamenten, Pflanzenschutzmitteln, Elektrolytlösungen und als Katalysatoren für die Härtung von Harzen aus Epoxyden und Polyurethanen, die jedoch durch keinerlei explizites Beispiel gestützt werden.

Es gibt keinen Hinweis auf eine katalytische Aktivität der so hergestellten ImidazoliumSalze für die Umsetzung von Polyisocyanaten und Polyolen für die Anwendung in Lacken, oder alternativen Einsatz zu den üblichen Lewis-Säure-Katalysatoren wie DBTL.

JP 2006 152154 beschreibt den Einsatz ionischer Flüssigkeiten in Bindemitteln und den Einsatz in druckempfindlichen Klebeschichten für elektronische Komponenten mit antistatischen Eigenschaften. Als Beispiel für eine ionische Flüssigkeit wird unter Anderen 1-Methyl-3-butyl-imidazolium halogenid genannt. Es wird auch eine Umsetzung eines Polyacrylatols mit einem Polyisocyanat offenbart. Katalytische Eigenschaften der ionischen Flüssigkeiten werden nicht beschrieben, genauso wenig die Verbesserung von Härtungseigenschaften oder die Anwendung von Lacken, oder den Einsatz in Polyisocyanaten oder Mischungen aus Polyisocyanaten und Polyolen direkt vor der Anwendung.

DE 10 2008 026 341 A1 beschreibt ein Verfahren zur Herstellung von Polyurethanbeschichtungen unter Verwendung von stickstoffhaltigen Heterozyklen als Katalysator. Die stickstoffhaltigen Heterozyklen umfassen auch Imidazoliumsalze die in 2-Position mit Wasserstoff substituiert sein können, vorzugsweise weisen die Imidazoliumsalze in 2-Position Substituenten wie Alkoxygruppen oder Carboxylgruppen auf. Die Umsetzung erfolgt vorzugsweise bei einer Temperatur von mindestens 60°C; Hinweise auf niedrigere Umsetzungstemperaturen liefert DE 10 2008 026 341 A1 nicht.

Journal ofthe Brazilian Chemical Society, 2009, 18(6), 1220 - 1223, beschreibt die Amidierung von Isocyanaten mit aromatischen Carbonsäuren in Anwesenheit Ionischer Flüssigkeiten als Reaktionsmedium. Gegenüber anderen Lösungsmitteln wie N,N-Dimethylformamid, N-Methylpyrrolidon und Toluol werden höhere Ausbeuten erhalten, und eine positive Wirkung der Ionischen Flüssigkeiten angeführt. Die prinzipielle Reaktion von Isocyanaten mit Aminen, Alkoholen und Säuren wird lediglich allgemein, jedoch nicht explizit offenbart. Die Ionischen Flüssigkeiten als Lösungsmittel können Katalysatoren in den Umsetzungen ersetzen.

Nachteilig ist, daß die genannten Halogenide bei Lacken auf Metallsubstraten Korrosion herbeiführen können.

Die Aufgabe der vorliegenden Erfindung bestand darin, neue Katalysatoren für die Beschichtung mit zweikomponentigen Polyurethanlacken zu entwickeln, die die üblichen metallorganischen Katalysatoren, insbesondere zinnorganische Verbindungen des Standes der Technik ersetzen können und zusätzlich verbesserte Härtungs- und/oder Beschichtungseigenschaften bewirken.

In der Praxis derzeit wohl am weitesten verbreitet ist DBTL, das negative toxische Eigenschaften verschiedener Art aufweist.

Die Aufgabe wurde gelöst durch ein Verfahren zur Beschichtung von Substraten mit Beschichtungsmassen, umfassend
- in einem ersten Schritt Beschichten des Substrats mit mindestens einer Beschichtungsmasse enthaltend
- (A) mindestens ein Polyisocyanat, erhältlich durch Umsetzung mindestens eines monomeren Isocyanats,
- (B) mindestens eine Verbindung, die mindestens zwei gegenüber Isocyanat reaktive Gruppen, eine zahlenmittleres Molekulargewicht Mn von mindestens 1000 g/mol und eine OH-Zahl von 40 bis 350 mg KOH/g aufweist,
- (C) mindestens ein Imidazoliumsalz,
- (D) optional mindestens ein Lösungsmittel,
- (E) optional mindestens einen anderen Urethanisierungskatalysator als (C), sowie,
- (F) optional andere lacktypische Komponenten und/oder Additive,
wobei das Imidazoliumsalz (C) die Formel 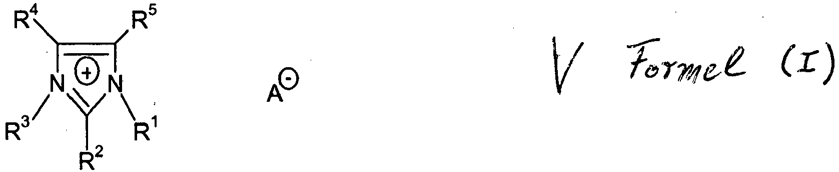 hat, worin R¹ und R³ unabhängig voneinander für einen organischen Rest mit 1 bis 20 C-Atomen stehen, R⁴ und R⁵ unabhängig voneinander für ein H-Atom oder einen organischen Rest mit bis zu 20 C-Atomen stehen, R² Wasserstoff oder eine C₁- bis C₁₈-Alkylgruppe bedeutet und A- für ein Anion steht,
- optional Trocknen der auf das Substrat aufgebrachten Beschichtungsmasse gefolgt von
- Härten der auf das Substrat aufgebrachten Beschichtungsmasse.

Mit diesen Beschichtungsmassen können Beschichtungen mit mindestens vergleichbaren Eigenschaften erhalten werden, wie mit metallorganischen Katalysatoren.

Gegenüber einer Härtung mit vergleichbaren Mengen DBTL kann die Härtung bei niedrigeren Härtungstemperaturen bzw. verkürzten Härtungszeiten durchgeführt werden. Mit vergleichbarer Menge DBTL ist gemeint, dass im anwendungstechnischen direkten Vergleich ähnliche Verarbeitungszeiten eingestellt werden. Als Maß für die Verarbeitungszeit wird dabei bevorzugt die gleiche Gelzeit eingestellt (s. Beispiele).

Das erfindungsgemäße Verfahren zeichnet sich dadurch aus, dass eine hohe Härte des Lacksystems bereits bei tiefen Härtungstemperaturen erreicht wird. Die Härte übertrifft die Werte der mit gängigen Katalysatoren, insbesondere DBTL, erreichten Werte bei gleichzeitig guter Verarbeitungszeit.

### Polyisocyanate (A)

Die für die Herstellung der Polyisocyanate eingesetzten monomeren Isocyanate können aromatisch, aliphatisch oder cycloaliphatisch sein, bevorzugt aliphatisch oder cycloaliphatisch, was in dieser Schrift kurz als (cyclo)aliphatisch bezeichnet wird, besonders bevorzugt sind aliphatische Isocyanate.

Aromatische Isocyanate sind solche, die mindestens ein aromatisches Ringsystem enthalten, also sowohl rein aromatische wie auch araliphatische Verbindungen. Cycloaliphatische Isocyanate sind solche, die mindestens ein cycloaliphatisches Ringsystem enthalten.

Aliphatische Isocyanate sind solche, die ausschließlich gerade oder verzweigte Ketten enthalten, also acyclische Verbindungen.

Bei den monomeren Isocyanaten handelt es sich bevorzugt um Diisocyanate, die genau zwei Isocyanatgruppen tragen. Es kann sich aber prinzipiell auch um Monoisocyanate mit einer Isocyanatgruppe handeln.

Es kommen prinzipiell auch höhere Isocyanate mit im Mittel mehr als 2 Isocyanatgruppen in betracht. Dafür eignen sich beispielsweise Triisocyanate wie Triisocyanatononan, 2'-Isocyanatoethyl-(2,6-diisocyanatohexanoat), 2,4,6-Triisocyanatotoluol, Triphenylmethantriisocyanat oder 2,4,4'-Triisocyanatodiphenylether oder die Gemische aus Di-, Tri- und höheren Polyisocyanaten, die beispielsweise durch Phosgenierung von entsprechenden Anilin/Formaldehyd-Kondensaten erhalten werden und Methylenbrücken aufweisende Polyphenylpolyisocyanate darstellen.

Diese monomeren Isocyanate weisen keine wesentlichen Umsetzungsprodukte der Isocyanatgruppen mit sich selbst auf.

Bei den monomeren Isocyanaten handelt es sich bevorzugt um Isocyanate mit 4 bis 20 C-Atomen. Beispiele für übliche Diisocyanate sind aliphatische Diisocyanate wie Tetramethylendiisocyanat, 1,5-Pentamethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, (z.B. Methyl- oder Ethyl-2,6-diisocyanatohexanoat),Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5-trimethyl-5-(isocyanatomethyl)cyclohexan (Isophorondiisocyanat), 1,3- oder 1,4-Bis(isocyanatomethyl)cyclohexan oder 2,4-, oder 2,6-Diisocyanato-1-methylcyclohexan sowie 3 (bzw. 4), 8 (bzw. 9)-Bis(isocyanatomethyl)-tricyclo[5.2.1.0^{2.6}]decan-Isomerengemische, sowie aromatische Diisocyanate wie 2,4-oder 2,6-Toluylendiisocyanat und deren Isomerengemische, m- oder p-Xylylendiisocyanat, 2,4'- oder 4,4'-Diisocyanatodiphenylmethan und deren Isomeren-gemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldi-phenylmethan-4,4'-diisocyanat, Tetramethylxylylendiisocyanat, 1,4-Diisocyanatobenzol oder Diphenylether-4,4'-diisocyanat.

Besonders bevorzugt sind 1,6-Hexamethylendiisocyanat, 1,3-Bis(isocyanatomethyl)cyclo-hexan, Isophorondiisocyanat und 4,4'- oder 2,4'-Di(isocyanatocyclohexyl)methan, ganz besonders bevorzugt sind Isophorondiisocyanat und 1,6-Hexamethylendiisocyanat, insbesondere bevorzugt ist 1,6-Hexamethylendiisocyanat.

Es können auch Gemische der genannten Isocyanate vorliegen.

Isophorondiisocyanat liegt zumeist als ein Gemisch, und zwar der cis- und trans-Isomere vor, in der Regel im Verhältnis von ca. 60:40 bis 90:10 (w/w), bevorzugt von 70:30-90:10.

Dicyclohexylmethan-4,4'-diisocyanat kann ebenfalls als Gemisch der verschiedenen cis- und trans-Isomere vorliegen.

Für die vorliegende Erfindung können sowohl solche Diisocyanate eingesetzt werden, die durch Phosgenierung der korrespondierenden Amine erhalten werden, als auch solche, die ohne die Verwendung von Phosgen, d. h. nach phosgenfreien Verfahren, hergestellt werden. Nach Angaben der EP-A-0 126 299 (US 4 596 678), EP-A-126 300 (US 4 596 679) und EP-A-355 443 (US 5 087 739) beispielsweise können (cyclo)aliphatische Diisocyanate, z.B. wie 1,6-Hexamethylendiisocyanat (HDI), isomere aliphatische Diisocyanate mit 6 Kohlenstoffatomen im Alkylenrest, 4,4'- oder 2,4'-Di(isocyanatocyclohexyl)methan und 1-Isocyanato-3-isocyanato-methyl-3,5,5-trimethylcyclochexan (Isophorondiisocyanat bzw. IPDI) hergestellt werden durch Umsetzung der (cyclo)aliphatischen Diamine mit beispielsweise Harnstoff und Alkoholen zu (cyclo)aliphatischen Biscarbaminsäureestern und deren thermische Spaltung in die entsprechenden Diisocyanate und Alkohole. Die Synthese erfolgt meist kontinuierlich in einem Kreislaufverfahren und optional in Gegenwart von N-unsubstituierten Carbaminsäureestern, Dialkylcarbonaten und anderen aus dem Reaktionsprozeß zurückgeführten Nebenprodukten. So erhaltene Diisocyanate weisen in der Regel einen sehr geringen oder sogar nicht meßbaren Anteil an chlorierten Verbindungen auf, was beispielsweise in Anwendungen in der Elektronikindustrie vorteilhaft ist.

In einer Ausführungsform der vorliegenden Erfindung weisen die eingesetzten Isocyanate einen Gesamtgehalt an hydrolysierbarem Chlor von weniger als 200 ppm auf, bevorzugt von weniger als 120 ppm, besonders bevorzugt weniger als 80 ppm, ganz besonders bevorzugt weniger als 50 ppm, insbesondere weniger als 15 ppm und speziell weniger als 10 ppm. Dies kann beispielsweise gemessen werden durch die ASTM-Vorschrift D4663-98. Es können aber selbstverständlich auch monomere Isocyanate mit einem höheren Chlorgehalt eingesetzt werden, beispielsweise bis zu 1000 ppm, bevorzugt bis zu 800 ppm und besonders bevorzugt bis zu 500 ppm totalem Chlorgehalt (ermittelt per argentometrischer Titration nach Hydrolyse) und gleichzeiitg bis zu 100 ppm, bevorzugt bis zu 30 ppm Gehalt an hydrolysierbarem Chlor. Selbstverständlich können auch Gemische aus solchen monomeren Isocyanaten, die durch Umsetzung der (cyclo)aliphatischen Diamine mit beispielsweise Harnstoff und Alkoholen und Spaltung der erhaltenen (cyclo)aliphatischen Biscarbaminsäureester erhalten worden sind, mit solchen Diisocyanaten, die durch Phosgenierung der korrespondierenden Amine erhalten worden sind, eingesetzt werden.

Die Polyisocyanate (A), zu denen die monomeren Isocyanate oligomerisiert werden können, sind in der Regel wie folgt charakterisiert:
Die mittlere NCO Funktionalität solcher Verbindungen beträgt in der Regel mindestens 1,8 und kann bis zu 8 betragen, bevorzugt 2 bis 5 und besonders bevorzugt 2,4 bis 4.

Der Gehalt an Isocyanatgruppen nach der Oligomerisierung, berechnet als NCO = 42 g/mol, beträgt, wenn nicht anders angegeben, in der Regel von 5 bis 25 Gew%.

Bevorzugt handelt es sich bei den Polyisocyanaten (A) um folgende Verbindungen:
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im Allgemeinen einen NCO-Gehalt von 10 bis 30 Gew.-%, insbesondere 15 bis 25 Gew.-% und eine mittlere NCO-Funktionalität von 2,6 bis 8.
   Die Isocyanuratgruppen aufweisenden Polyisocyanate können in geringerem Umfang auch Urethan- und/oder Allophanat-Gruppen enthalten, bevorzugt mit einem Gehalt gebundenen Alkohols von kleiner 2 % bezogen auf das Polyisocyanat.
2) Uretdiongruppen aufweisende Polyisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiongruppen aufweisenden Polyisocyanate werden häufig im Gemisch mit anderen Polyisocyanaten, insbesondere den unter 1) genannten, erhalten. Uretdiongruppen aufweisende Polyisocyanate weisen üblicherweise Funktionalitäten von 2 bis 3 auf.
   Dazu können die Diisocyanate unter Reaktionsbedingungen umgesetzt werden, unter denen sowohl Uretdiongruppen als auch die anderen Polyisocyanate gebildet werden, oder zunächst die Uretdiongruppen gebildet und diese anschließend zu den anderen Polyisocyanaten umgesetzt werden oder die Diisocyanate zunächst zu den anderen Polyisocyanaten und diese anschließend zu Uretdiongruppen-haltigen Produkten umgesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris-(6-isocyanatohexyl)-biuret oder dessen Gemische mit seinen höheren Homologen. Diese Biuretgruppen aufweisenden Polyisocyanate weisen im Allgemeinen einen NCO-Gehalt von 18 bis 24 Gew.-% und eine mittlere NCO-Funktionalität von 2,8 bis 6 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Diisocyanat, beispielsweise Hexamethylendiisocyanat oder Isophorondiisocyanat, mit ein- oder mehrwertigen Alkoholen (A). Diese Urethan- und/oder Allophanatgruppen aufweisenden Polyisocyanate haben im Allgemeinen einen NCO-Gehalt von 12 bis 24 Gew.-% und eine mittlere NCO-Funktionalität von 2,0 bis 4,5. Solche Urethan- und/oder Allophanatgruppen aufweisenden Polyisocyanate können unkatalysiert oder bevorzugt in Gegenwart von Katalysatoren, wie beispielsweise Ammoniumcarboxylaten oder -hydroxiden, oder Allophanatisierungskatalysatoren, z.B. Wismut-, Kobalt-, Cäsium-, Zn-(II)- oder Zr-(IV)-Verbindungen, jeweils in Anwesenheit von ein-, zwei- oder mehrwertigen, bevorzugt einwertigen Alkoholen, hergestellt werden.
   Diese Urethan- und/oder Allophanatgruppen aufweisenden Polyisocyanate treten häufig in Mischformen mit den unter 1) genannten Polyisocyanaten auf.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid zugänglich.
6) Iminooxadiazindiongruppen enthaltende Polyisocyanate, vorzugsweise von Hexamethylendiisocyanat oder Isophorondiisocyanat abgeleitet. Solche Iminooxadiazindiongruppen enthaltenden Polyisocyanate sind aus Diisocyanaten mittels spezieller Katalysatoren herstellbar.
7) Uretonimin-modifizierte Polyisocyanate.
8) Carbodiimid-modifizierte Polyisocyanate.
9) Hyperverzweigte Polyisocyanate, wie sie beispielsweise bekannt sind aus der DE-A1 10013186 oder DE-A1 10013187.
10) Polyurethan-Polyisocyanat-Präpolymere, aus Di- und/oder Polyisocyanaten mit Alkoholen.
11) Polyharnstoff-Polyisocyanat-Präpolymere.
12) Die Polyisocyanate 1)-11), bevorzugt 1), 3), 4) und 6) können nach deren Herstellung in Biuretgruppen- oder Urethan-/Allophanat-Gruppen aufweisende Polyisocyanate mit aromatisch, cycloaliphatisch oder aliphatisch gebundenen, bevorzugt (cyclo)aliphatisch gebundenen Isocyanatgruppen, überführt werden. Die Bildung von Biuretgruppen erfolgt beispielsweise durch Zugabe von Wasser oder Umsetzung mit Aminen. Die Bildung von Urethan- und/oder Allophanatgruppen erfolgt durch Umsetzung mit ein-, zwei- oder mehrwertigen, bevorzugt einwertigen Alkoholen, optional in Gegenwart von geeigneten Katalysatoren. Diese Biuret- oder Urethan-/Allophanatgruppen aufweisenden Polyisocyanate weisen im Allgemeinen einen NCO-Gehalt von 10 bis 25 Gew.-% und eine mittlere NCO-Funktionalität von 3bis 8 auf.
13) Hydrophil modifizierte Polyisocyanate, d.h. Polyisocyanate, die neben den unter 1-12 beschriebenen Gruppen solche enthalten, die formal durch Addition von Molekülen mit NCO-reaktiven Gruppen und hydrophilierenden Gruppen an die Isocyanatgruppen obiger Moleküle entstehen. Bei letzteren handelt es sich um nichtionische Gruppen wie Alkyl-Polyethylenoxid und/oder ionische, welche von Phosphorsäure, Phosphonsäure, Schwefelsäure oder Sulfonsäure, bzw. ihren Salzen abgeleitet sind.
14) Modifizierte Polyisocyanate für Dual Cure Anwendungen, d.h. Polyisocyanate, die neben den unter 1-13 beschriebenen Gruppen solche enthalten, die formal durch Addition von Molekülen mit NCO-reaktiven Gruppen und durch UV- oder aktinische Strahlung vernetzbare Gruppen an die Isocyanatgruppen obiger Moleküle entstehen. Bei diesen Molekülen handelt es sich beispielsweise um Hydroxyallkyl(meth)acrylate und andere Hydroxy-Vinylverbindungen.

In einer bevorzugten Ausführungsform der vorliegenden Erfindung ist das Polyisocyanat (A) ausgewählt aus der Gruppe bestehend aus Isocyanuraten, Biureten, Urethanen und Allophanaten, bevorzugt aus der Gruppe bestehend aus Isocyanuraten, Urethanen und Allophanaten, besonders bevorzugt handelt es sich um ein isocyanuratgruppenhaltiges Polyisocyanat.

In einer besonders bevorzugten Ausführungsform handelt es sich bei dem Polyisocyanat (A) um Isocyanuratgruppen enthaltende Polyisocyanate von 1,6-Hexamethylendiisocyanat.

In einer weiteren besonders bevorzugten Ausführungsform handelt es sich bei dem Polyisocyanat (A) um ein Gemisch von Isocyanuratgruppen enthaltenden Polyisocyanaten, ganz besonders bevorzugt von 1,6-Hexamethylendiisocyanat und von Isophorondiisocyanat.

In einer besonders bevorzugten Ausführungsform handelt es sich bei dem Polyisocyanat (A) um ein Gemisch enthaltend niedrigviskose Polyisocyanate, bevorzugt Isocyanuratgruppen enthaltende Polyisocyanate, mit einer Viskosität von 600-1500 mPa*s, insbesondere unter 1200 mPa*s, niederviskose Urethane und/oder Allophanate mit einer Viskosität von 200-1600 mPa*s, insbesondere 600-1500 mPa*s, und/oder Iminooxadiazindiongruppen enthaltende Polyisocyanate.

In dieser Schrift wird die Viskosität bei 23 °C gemäß DIN EN ISO 3219/A.3 in einem Kegel-Platte-System mit einem Geschwindigkeitsgefälle von 1000 s⁻¹ angegeben, falls nicht anders vermerkt.

Das Verfahren zur Herstellung der Polyisocyanate kann erfolgen, wie in WO 2008/68198 beschrieben, dort besonders von Seite 20, Zeile 21 bis Seite 27, Zeile 15, was hiermit durch Bezugnahme Bestandteil der vorliegenden Anmeldung sei.

Die Reaktion kann beispielsweise abgebrochen werden, wie dort von Seite 31, Zeile 19 bis Seite 31, Zeile 31 beschrieben und die Aufarbeitung erfolgen wie dort beschrieben von Seite 31, Zeile 33 bis Seite 32, Zeile 40.

Die Reaktion kann alternativ auch abgebrochen werden, wie in WO 2005/087828 von Seite 11, Zeile 12 bis Seite 12, Zeile 5 beschrieben.

Bei thermisch labilen Katalysatoren ist es weiterhin auch möglich, die Reaktion abzubrechen durch Erhitzen des Reaktionsgemischs auf eine Temperatur oberhalb von mindestens 80°C, bevorzugt mindestens 100 °C, besonders bevorzugt mindestens 120 °C. Dafür reicht in der Regel bereits die Erwärmung des Reaktionsgemischs, wie sie zur Abtrennung des unumgesetzten Isocyanats durch Destillation in der Aufarbeitung erforderlich ist.

Sowohl bei thermisch nicht-labilen als auch bei thermisch labilen Katalysatoren besteht die Möglichkeit, durch Zugabe von Deaktivatoren die Reaktion bei niedrigeren Temperaturen abzubrechen. Geeignete Deaktivatoren sind beispielsweise Chlorwasserstoff, Phosphorsäure, organische Phosphate, wie Dibutylphosphat oder Diethylhexylphosphat, Carbamate wie Hydroxyalkylcarbamat oder organische Carbonsäuren.

Diese Verbindungen werden pur oder verdünnt in geeigneter Konzentration, die zum Reaktionsabbruch erforderlich ist, zugegeben.

Bei dem Bindemittel (B) handelt es sich um mindestens eine Verbindung, beispielsweise ein bis drei, bevorzugt ein bis zwei und besonders bevorzugt genau eine Verbindung, die mindestens zwei gegenüber Isocyanat reaktive Gruppen aufweist, bevorzugt 2 bis 15, besonders bevorzugt 2 bis 8 und ganz besonders bevorzugt 3 bis 7.

Bei den gegenüber Isocyanat reaktiven Gruppen handelt es sich um Hydroxy-, primäre oder sekundäre Aminogruppen, insbesondere um Hydroxygruppen, unter diesen bevorzugt primäre oder sekundäre Hydroxygruppen, besonders bevorzugt primäre Hydroxygruppen.

Bei den Bindemitteln kann es sich beispielsweise um Polyacrylatpolyole, Polyesterpolyole, Polyetherpolyole, Polyurethanpolyole; Polyharnstoffpolyole; Polyesterpolyacrylatpolyole; Polyesterpolyurethanpolyole; Polyurethanpolyacrylatpolyole, Polyurethanmodifizierte Alkydharze; Fettsäuremodifizierte Polyesterpolyurethanpolyole, Kopolymerisate mit Allylethern, Propfpolymerisate aus den genannten Stoffgruppen mit z.B. unterschiedlichen Glasübergangstemperaturen, sowie Mischungen der genannten Bindemittel handeln. Bevorzugt sind Polyacrylatpolyole, Polyesterpolyole und Polyurethanpolyole.

Bevorzugte OH-Zahlen, gemessen gemäß DIN 53240-2 (potentiometrisch), sind 40-350 mg KOH/g Festharz für Polyester, bevorzugt 80-180 mg KOH/g Festharz, und 15-250 mg KOH/g Festharz für Polyacrylatole, bevorzugt 80-160 mg KOH/g.

Zusätzlich können die Bindemittel eine Säurezahl gemäß DIN EN ISO 3682 (potentiometrisch) bis 200 mg KOH/g, bevorzugt bis 150 und besonders bevorzugt bis 100 mg KOH/g aufweisen.

Besonders bevorzugte Bindemittel (B) sind Polyacrylatpolyole und Polyesterole.

Polyacrylatpolyole weisen bevorzugt ein Molekulargewicht Mₙ von mindestens 500, besonders bevorzugt mindestens 1200 g/mol auf. Das Molekulargewicht Mₙ kann prinzipiell nach oben unbegrenzt sein, bevorzugt bis zu 50.000, besonders bevorzugt bis zu 20.000 g/mol, ganz besonders bevorzugt bis zu 10.000 g/mol und insbesondere bis zu 5.000 g/mol betragen.

Die hydroxyfunktionellen Monomere (siehe unten) werden in solchen Mengen bei der Copolymerisation mit verwendet, daß die obengenannten Hydroxyzahlen der Polymerisate resultieren, die im allgemeinen einem Hydroxygruppengehalt der Polymerisate von 0,5 bis 8, vorzugsweise 1 bis 5 Gew.-% entsprechen.

Dabei handelt es sich um hydroxygruppenhaltige Copolymere aus mindestens einem hydroxygruppenhaltigen (Meth)acrylat mit mindestens einem weiteren polymerisationsfähigen Comonomer ausgewählt aus der Gruppe bestehend aus (Meth)acrylsäurealkylestern, Vinylaromaten, α, β-ungesättigten Carbonsäuren und anderen Monomeren.

Als (Meth)acrylsäurealkylestern genannt seien z.B. C₁-C₂₀-Alkyl(meth)acrylate, Vinylaromaten sind solche mit bis zu 20 C-Atomen, α,β-ungesättigte Carbonsäuren umfassen auch deren Anhydride und andere Monomere sind beispielsweise Vinylester von bis zu 20 C-Atomen enthaltenden Carbonsäuren, ethylenisch ungesättigte Nitrile, Vinylether von 1 bis 10 C-Atome enthaltenden Alkoholen und, weniger bevorzugt, aliphatische Kohlenwasserstoffe mit 2 bis 8 C-Atomen und 1 oder 2 Doppelbindungen.

Als (Meth)acrylsäurealkylester bevorzugt sind solche mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, Vinylstearat, Vinylpropionat und Vinylacetat.

α, β-Ungesättigte Carbonsäuren und deren Anhydride können beispielsweise sein Acrylsäure, Methacrylsäure, Fumarsäure, Crotonsäure, Itaconsäure, Maleinsäure oder Maleinsäureanhydrid, bevorzugt Acrylsäure.

Als hydroxyfunktionelle Monomere seien Monoester von α,β-ungesättigten Carbonsäuren, wie Acrylsäure, Methacrylsäure (in dieser Schrift kurz als "(Meth)acrylsäure" bezeichnet), mit Di- oder Polyolen erwähnt, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,4-Butandiol, 1,5-Pentandiol, Neopentylglykol, Hydroxypivalinsäureneopentylglykolester, 2-Ethyl-1,3-Propandiol, 2-Methyl-1,3-Propandiol, 2-Butyl-2-ethyl-1,3-Propandiol, 1,6-Hexandiol, 2-Methyl-1,5-pentandiol, 2-Ethyl-1,4-butandiol, 2-Ethyl-1,3-Hexandiol, 2,4-Diethyl-oktan-1,3-diol, 2,2-Bis(4-hydroxycyclohexyl)propan, 1,1-, 1,2-, 1,3- und 1,4-Bis(hydroxymethyl)-cyclohexan, 1,2-, 1,3- oder 1,4-Cyclohexandiol, Glycerin, Trimethylolethan, Trimethylolpropan, Trimethylolbutan, Pentaerythrit, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit, Isomalt, Poly-THF mit einem Molgewicht zwischen 162 und 4500, bevorzugt 250 bis 2000, Poly-1,3-propandiol oder Polypropylenglykol mit einem Molgewicht zwischen 134 und 2000 oder Polyethylenglykol mit einem Molgewicht zwischen 238 und 2000 sein.

Bevorzugt sind 2-Hydroxyethylacrylat, 2-Hydroxyethylmethacrylat, 2- oder 3-Hydroxypropylacrylat, 1,4-Butandiolmonoacrylat oder 3-(Acryloyloxy)-2-hydroxypropylacrylat und besonders bevorzugt 2-Hydroxyethylacrylat und/oder 2-Hydroxyethylmethacrylat.

Als vinylaromatische Verbindungen kommen z.B. Vinyltoluol, α-Butylstyrol, α-Methylstyrol, 4-n-Butyl-styrol, 4-n-Decylstyrol und vorzugsweise Styrol in Betracht.

Beispiele für Nitrile sind Acrylnitril und Methacrylnitril.

Geeignete Vinylether sind z.B. Vinylmethylether, Vinylisobutylether, Vinylhexylether und Vinyloctylether.

Als nicht aromatische Kohlenwasserstoffe mit 2 bis 8 C-Atomen und einer oder zwei olefinischen Doppelbindungen seien Butadien, Isopren, sowie Ethylen, Propylen und Isobutylen genannt.

Weiterhin sind N-Vinylformamid, N-Vinylpyrrolidon sowie N-Vinylcaprolactam einsetzbar, weiterhin, ethylenisch ungesättigte Säuren, insbesondere Carbonsäuren, Säureanhydride oder Säureamide, sowie Vinylimidazol. Auch Epoxidgruppen aufweisende Comonomere wie z.B. Glycidylacrylat oder -methacrylat oder-Monomere wie N-Methoxymethylacrylamid oder -meth-acrylamid können in geringen Mengen mit verwendet werden.

Bevorzugt sind Ester der Acrylsäure bzw. der Methacrylsäure mit 1 bis 18, vorzugsweise 1 bis 8 Kohlenstoffatomen im Alkoholrest wie z.B. Methylacrylat. Ethylacrylat, Isopropylacrylat, n-Propylacrylat, n-Butylacrylat, 2-Ethylhexylacrylat, n-Stearylacrylat, die diesen Acrylaten entsprechenden Methacrylate, Styrol, alkylsubstituierte Styrole, Acrylnitril, Methacrylnitril, Vinylacetat oder Vinylstearat bzw. beliebige Gemische derartiger Monomere.

Die Hydroxygruppen tragenden Monomere werden in die Copolymerisation der Hydroxygruppen tragenden (Meth)Acrylate im Gemisch mit anderen polymerisierbaren, bevorzugt radikalisch polymerisierbaren Monomeren, eingesetzt, bevorzugt solche, welche zu mehr als 50 Gew% aus C₁-C₂₀-, bevorzugt C₁- bis C₄-Alkyl(meth)acrylat, (Meth)acrylsäure, Vinylaromaten mit bis zu 20 C-Atomen, Vinylestern von bis zu 20 C-Atomen enthaltenden Carbonsäuren, Vinylhalogeniden, nicht aromatischen Kohlenwasserstoffen mit 4 bis 8 C-Atomen und 1 oder 2 Doppelbindungen, ungesättigten Nitrilen und deren Mischungen bestehen. Besonders bevorzugt sind die Polymere, die neben den Hydroxygruppen tragenden Monomeren zu mehr als 60 Gew% aus C₁-C₁₀-Alkyl(meth)acrylaten, Styrol und dessen Derivaten oder deren Mischungen bestehen.

Die Herstellung der Polymerisate kann durch Polymerisation nach üblichen Verfahren durchgeführt werden. Vorzugsweise erfolgt die Herstellung der Polymerisate in einer Emulsionspolymerisation oder in organischer Lösung. Möglich sind kontinuierliche oder diskontinuierliche Polymerisationsverfahren. Von den diskontinuierlichen Verfahren sind das Batch- und das Zulaufverfahren zu nennen, wobei letzteres bevorzugt ist. Bei dem Zulaufverfahren wird das Lösungsmittel allein oder mit einem Teil des Monomergemisches vorgelegt, auf die Polymerisationstemperatur erwärmt, die Polymerisation im Fall einer Monomervorlage radikalisch gestartet und das restliche Monomergemisch zusammen mit einem Initiatorgemisch im Verlauf von 1 bis 10 Stunden, vorzugsweise 3 bis 6 Stunden, zudosiert. Optional wird anschließend noch nachaktiviert, um die Polymerisation bis zu einem Umsatz von mindestens 99 % durchzuführen.

Als Lösungsmittel kommen beispielsweise Aromaten, wie Solventnaphtha, Benzol, Toluol, Xylol, Chlorbenzol, Ester wie Ethylacetat, Butylacetat, Methylglykolacetat, Ethylglykolacetat, Methoxypropylacetat, Ether wie Butylglykol, Tetrahydrofuran, Dioxan, Ethylglykolether, Ketone wie Aceton, Methylethylketon, halogenhaltige Lösemittel wie Methylenchlorid oder Trichlormonofluorethan in Betracht.

Weitere Bindemittel (B) sind z.B. Polyesterpolyole, wie sie durch Kondensation von Polycarbonsäuren, insbesondere Dicarbonsäuren mit Polyolen, insbesondere Diolen erhältlich sind. Um eine für die Polymerisation angemessene Funktionalität des Polyesterpolyols zu gewährleisten werden partiell auch Triole, Tetrole etc. wie auch Trisäuren, etc. eingesetzt.

Polyesterpolyole, sind z.B. aus Ullmanns Enzyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, aromatisch oder heterocyclisch sein und optional, z.B. durch Halogenatome, substituiert und/oder ungesättigt sein. Als Beispiele hierfür seien genannt:
Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Trimellithsäure, Azelainsäure, 1,4-Cyclohexandicarbonsäure oder Tetrahydrophthalsäure, Korksäure, Azelainsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäureanhydrid, dimere Fettsäuren, deren Isomere und Hydrierungsprodukte sowie veresterbare Derivate, wie Anhydride oder Dialkylester, beispielsweise C₁-C₄-Alkylester, bevorzugt Methyl-, Ethyl- oder n-Butylester, der genannten Säuren eingesetzt werden. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, besonders bevorzugt Bernsteinsäure, Adipinsäure, Sebacinsäure und Dodecandicarbonsäure.

Als mehrwertige Alkohole kommen zur Herstellung der Polyesterole in Betracht 1,2-Propandiol, Ethylenglykol, 2,2-Dimethyl-1,2-Ethandiol, 1,3-Propandiol, 1,2-Butandiol, 1,3-Butandiol, 1,4-Butandiol, 3-Methylpentan-1,5-diol, 2-Ethylhexan-1,3-diol, 2,4-Diethyloctan-1,3-diol, 1,6-Hexandiol, Poly-THF mit einer Molmasse zwischen 162 und 4500, bevorzugt 250 bis 2000, Poly-1,3-propandiol mit einer Molmasse zwischen 134 und 1178, Poly-1,2-propandiol mit einer Molmasse zwischen 134 und 898, Polyethylenglykol mit einer Molmasse zwischen 106 und 458, Neopentylglykol, Hydroxypivalinsäureneopentylglykolester, 2-Ethyl-1,3-Propandiol, 2-Methyl-1,3-Propandiol, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Trimethylolbutan, Trimethylolpropan, Trimethylolethan, Neopentylglykol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt, die optional wie oben beschrieben alkoxyliert sein können.

Bevorzugt sind Alkohole der allgemeinen Formel HO-(CH₂)ₓ-OH, wobei x eine Zahl von 1 bis 20, bevorzugt eine gerade Zahl von 2 bis 20 ist. Bevorzugt sind Ethylenglycol, Butan-1,4-diol, Hexan-1,6-diol, Octan-1,8-diol und Dodecan-1,12-diol. Weiterhin bevorzugt ist Neopentylglykol.

Ferner kommen auch Polycarbonat-Diole in Betracht, wie sie z.B. durch Umsetzung von Phosgen mit einem Überschuß von den als Aufbaukomponenten für die Polyesterpolyole genannten niedermolekularen Alkohole erhalten werden können.

Geeignet sind auch Polyesterdiole auf Lacton-Basis, wobei es sich um Homo- oder Mischpolymerisate von Lactonen, bevorzugt um endständige Hydroxygruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-caprolacton, β-Propiolacton, gamma-Butyrolacton und/oder Methyl-ε-caprolacton, 4-Hydroxybenzoesäure, 6-Hydroxy-2-naphthalinsäure oder Pivalolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

In Polyurethanlacken sind Molmassen Mₙ der Polyester von 800 - 4000 g/mol üblich, wobei die hier verwendeten Polyester nicht darauf beschränkt sind.

Weiterhin sind als Bindemittel auch Polyetherole geeignet, die durch Addition von Ethylenoxid, Propylenoxid und/oder Butylenoxid, bevorzugt Ethylenoxid und/oder Propylenoxid und besonders bevorzugt Ethylenoxid an H-aktive Komponenten hergestellt werden. Ebenso sind Polykondensate aus Butandiol geeignet. In Polyurethanlacken sind Molmassen der Polyether von 500-2000 g/mol üblich, wobei die hier verwendeten Polyether nicht darauf beschränkt sind.

Die Polymeren können zumindest teilweise durch sogenannte Reaktivverdünner ersetzt werden. Dabei kann es sich um blockierte sekundäre oder primäre Amine (Aldimine und Ketime) oder um Verbindungen mit sterisch gehinderten und / oder elektronenarmen sekundären Aminogruppen handeln, beispielsweise Asparaginsäureester gemäß EP 403921 oder WO 2007/39133.

### (C) Imidazoliumsalz

Bei der Verbindung (C) handelt es sich um mindestens ein, beispielsweise ein bis drei, bevorzugt ein bis zwei und besonders bevorzugt genau ein Imidazoliumsalz der Formel I 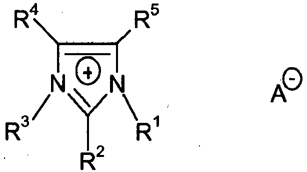 worin R¹ und R³ unabhängig voneinander für einen organischen Rest mit 1 bis 20 C-Atomen stehen,
R⁴ und R⁵ unabhängig voneinander für ein H-Atom oder einen organischen Rest mit bis zu 20 C-Atomen stehen,
R² Wasserstoff oder eine C₁- bis C₁₈-Alkylgruppe bedeutet und A für ein Anion steht,

R¹ und R³ stehen vorzugsweise unabhängig voneinander für einen organischen Rest mit 1 bis 10 C-Atomen. Der organische Rest kann auch noch weitere Heteroatome, insbesondere Sauerstoffatome, Stickstoff-, Schwefel oder Phosphoratome oder funktionelle Gruppen, zum Beispiel Hydroxygruppen, Ethergruppen, Estergruppen oder Carbonylgruppen enthalten.

Insbesondere stehen R¹ und R³ für einen Kohlenwasserstoffrest, der außer Kohlenstoff und Wasserstoff allenfalls noch Hydroxygruppen, Ethergruppen, Estergruppen oder Carbonylgruppen enthalten kann.

R¹ und R³ stehen besonders bevorzugt unabhängig voneinander für einen Kohlenwasserstoffrest mit 1 bis 20 C- Atomen, insbesondere mit 1 bis 10 C-Atomen, der keine sonstigen Heteroatome, z. B. Sauerstoff oder Stickstoff, enthält. Der Kohlenwasserstoffrest kann aliphatisch (wobei auch ungesättigte aliphatische Gruppen eingeschlossen sind) oder aromatisch sein oder sowohl aromatische als auch aliphatische Gruppen enthalten. Vorzugsweise stehen R¹ und R³ für einen aliphatischen Kohlenwasserstoffrest.

Als Kohlenwasserstoffreste genannt seien z.B. die Phenylgruppe, Benzylgruppe, eine durch eine oder mehrere C₁ bis C₄ Alkylgruppen substituierte Phenylgruppe oder Benzylgruppe, die Mesitylgruppe, Alkylgruppen und Alkenylgruppen, insbesondere die Alkylgruppe.

Ganz besonders bevorzugt stehen R¹ und R³ unabhängig voneinander für eine C₁ bis C₁₈ Alkylgruppe, bevorzugt für eine C₁ bis C₁₆, besonders bevorzugt eine C₁ bis C₁₄, ganz besonders bevorzugt C₁ bis C₁₂ und insbesondere C₁ bis C₁₀ Alkylgruppe. Als Alkylgruppe stellt eine C₁ bis C₆ Alkylgruppe eine besondere Ausführungsform dar und in einer ganz besonderen Ausführungsform handelt es sich bei der Alkylgruppe um eine C₁ bis C₄ Alkylgruppe.

Ganz besonders bevorzugt stehen R¹ und R³ unabhängig voneinander für eine Methyl-, Ethyl-, n-Propyl-, Isopropyl-, n-Butyl-, sec.-Butyl oder tert.-Butylgruppe, wobei die Methyl-, Ethyl-, n-Propyl- und n-Butylgruppe besondere Bedeutung haben.

Vorzugsweise steht R¹ für eine C₁ bis C₆, insbesondere eine C₁ bis C₄ Alkylgruppe.

Vorzugsweise steht R³ für eine Methylgruppe.

In der anspruchsgemäßen Ausführungsform steht R² für ein H-Atom oder für eine C₁ bis C₁₈ Alkylgruppe, bevorzugt für eine C₁ bis C₁₆, besonders bevorzugt eine C₁ bis C₁₄, ganz besonders bevorzugt C₁ bis C₁₂ und insbesondere C₁ bis C₁₀ Alkylgruppe. Für den Rest R² stellt eine C₁ bis C₆ Alkylgruppe eine besondere Ausführungsform dar und in einer ganz besonderen Ausführungsform handelt es sich bei der Alkylgruppe um eine C₁ bis C₄ Alkylgruppe.

R⁴ und R⁵ stehen vorzugsweise unabhängig voneinander für ein Wasserstoffatom oder einen organischen Rest mit 1 bis 10 C-Atomen. Der organische Rest kann auch noch weitere Heteroatome, insbesondere Sauerstoffatome, Stickstoff-, Schwefel oder Phosphoratome oder funktionelle Gruppen, zum Beispiel Hydroxygruppen, Ethergruppen, Estergruppen oder Carbonylgruppen enthalten.

Insbesondere stehen R⁴ und R⁵ für einen Kohlenwasserstoffrest, der außer Kohlenstoff und Wasserstoff allenfalls noch Hydroxygruppen, Ethergruppen, Estergruppen oder Carbonylgruppen enthalten kann.

R⁴ und R⁵ stehen besonders bevorzugt unabhängig voneinander für einen Kohlenwasserstoffrest mit 1 bis 20 C- Atomen, insbesondere mit 1 bis 10 C-Atomen, der keine sonstigen Heteroatome, z. B. Sauerstoff oder Stickstoff, enthält. Der Kohlenwasserstoffrest kann aliphatisch (wobei auch ungesättigte aliphatische Gruppen eingeschlossen sind) oder aromatisch sein oder sowohl aromatische als auch aliphatische Gruppen enthalten. Vorzugsweise stehen R¹ und R² für einen aliphatischen Kohlenwasserstoffrest.

Als Kohlenwasserstoffreste genannt seien z.B. die Phenylgruppe, Benzylgruppe, eine durch eine oder mehrere C₁ bis C₄ Alkylgruppen substituierte Phenylgruppe oder Benzylgruppe, die Mesitylgruppe, Alkylgruppen und Alkenylgruppen, insbesondere die Alkylgruppe.

Ganz besonders bevorzugt stehen R⁴ und R⁵ für ein Wasserstoffatom oder eine C₁ bis C₁₀ Alkylgruppe. Als Alkylgruppe ist eine C₁ bis C₆ Alkylgruppe besonders bevorzugt, in einer besonderen Ausführungsform handelt es sich bei der Alkylgruppe um eine C₁ bis C₄ Alkylgruppe.

Ganz besonders bevorzugt stehen R⁴ und R⁵ unabhängig voneinander für eine Methyl-, Ethyl-, n-Propyl-, Isopropyl-, n-Butyl-, sec.-Butyl oder tert.-Butylgruppe, eine, wobei die Methyl-, Ethyl-, n-Propyl- und n-Butylgruppe besondere Bedeutung haben.

In einer besonderen Ausführungsform stehen R⁴ und R⁵ jeweils für H-Atome. In einer weiteren besonderen Ausführungsform stehen R², R⁴ und R⁵ jeweils für H-Atome.

Eine weitere bevorzugte Ausführungsform sind symmetrische 1,3-Dialkylsubsitutierte und symmetrische 1,3-Dialkyl-2-R²-substituierte Imidazoliumionen.

Beispiele für Imidazoliumionen sind 1,2-Dimethyl-3-propylimidazolium, 1-Ethyl-2,3-dimethylimidazolium, 1-Butyl-2,3-dimethylimidazolium, 1-Benzyl-3-methylimidazolium, 3-Ethyl-1-methylimidazolium, 1-Propyl-3-methylimidazolium, 3-n-Butyl-1-methylimidazolium, 1-Hexyl-3-methylimidazolium, 1-Methyl-3-octylimidazolium, 1-Decyl-3-methylimidazolium, 1-Dodecyl-3-methylimidazolium, 1,3-Diethylimidazolium, 1,3-Diisopropylimidazolium, 1,3-Di-n-butylimidazolium, 1,3-Dihexylimidazolium sowie 1,2,3,4,5-Pentamethyl-imidazolium.

Bevorzugte Imidazoliumionen sind 3-Ethyl-1-methylimidazolium, 3-n-Butyl-1-methylimidazolium, 1,3-Diethylimidazolium; 1,3-Dihexylimidazolium, 1,3-Di-n-butylimidazolium und 1,3-Diisopropylimidazolium sowie 1,2,3,4,5-Pentamethylimidazolium.

Beim Anion A⁻ in Formel I handelt es sich um ein beliebiges Anion, bevorzugt um ein Carboxylatanion.

Andere Anionen als Carboxylatanion sind beispielsweise beschrieben in WO 2007/090755, dort besonders von Seite 20, Zeile 36 bis Seite 24, Zeile 37.

Als Anion in Betracht kommen insbesondere solche aus
der Gruppe der Halogenide und halogenhaltigen Verbindungen der Formeln: F⁻, Cl⁻, Br⁻, I⁻, BF₄⁻, PF₆⁻, AlCl₄⁻, Al₂Cl₇⁻, Al₃Cl₁₀⁻, AlBr₄⁻, FeCl₄⁻, BCl₄⁻, SbF₆⁻, AsF₆, -ZnCl₃⁻, SnCl₃⁻, CuCl₂⁻, CF₃SO₃-, (CF₃SO₃)₂N⁻, CF₃CO₂-, CCl₃CO₂⁻, CN⁻, SCN⁻, OCN⁻, NO²⁻, NO³⁻, N(CN)-;
der Gruppe der Sulfate, Sulfite und Sulfonate der allgemeinen Formeln: SO₄²⁻, HSO₄⁻, SO₃²⁻, HSO₃⁻, R^{a}OSO₃⁻, R^{a}SO₃⁻;
der Gruppe der Phosphate der allgemeinen Formeln: PO₄³⁻, HPO₄²⁻, H₂PO₄⁻, R^{a}PO₄²⁻, HR^{a}PO₄⁻, R^{a}R^{b}PO₄⁻;
der Gruppe der Phosphonate und Phosphinate der allgemeinen Formel: R^{a}HPO₃⁻, R^{a}R^{b}PO₂⁻, R^{a}R^{b}PO₃⁻;
der Gruppe der Phosphite der allgemeinen Formeln: PO₃³⁻, HPO₃²⁻, H₂PO₃⁻, R^{a}PO₃²⁻, R^{a}HPO₃⁻, R^{a}R^{b}PO₃⁻;
der Gruppe der Phosphonite und Phosphinite der allgemeinen Formel: R^{a}R^{b}PO₂⁻, R^{a}HPO₂⁻, R^{a}R^{b}PO⁻, R^{a}HPO⁻;
der Gruppe der Borate der allgemeinen Formeln: BO₃³⁻, HBO₃²⁻, H₂BO₃⁻, R^{a}R^{b}BO₃⁻, R^{a}HBO₃⁻, R^{a}BO₃²⁻, B(OR^{a})(OR^{b})(OR^{c})(OR^{d})⁻, B(HSO₄)⁻, B(R^{a}SO₄)⁻;
der Gruppe der Boronate der allgemeinen Formeln: R^{a}BO₂²⁻, R^{a}R^{b}BO⁻;
der Grüppe der Carbonate und Kohlensäureester der allgemeinen Formeln: HCO₃⁻, CO₃²⁻, R^{a}CO₃⁻;
der Gruppe der Silikate und Kieselsäuresäureester der allgemeinen Formeln: SiO₄⁴⁻, HSiO₄³, H₂SiO₄²⁻, H₃SiO₄⁻, R^{a}SiO₄³⁻, R^{a}R^{b}SiO₄²⁻, R^{a}R^{b}R^{c}SiO₄⁻, HR^{a}SiO₄²⁻, H₂R^{a}SiO₄⁻, HR^{a}R^{b}SiO₄⁻;
der Gruppe der Alkyl- bzw. Arylsilan-Salze der allgemeinen Formeln: R^{a}SiO₃³⁻, R^{a}R^{b}SiO₂²⁻, R^{a}R^{b}R^{c}SiO⁻, R^{a}R^{b}R^{c}SiO₃⁻, R^{a}R^{b}R^{c}SiO₂⁻, R^{a}R^{b}SiO₃²⁻;
der Gruppe der Carbonsäureimide, Bis(sulfonyl)imide und Sulfonylimide der allgemeinen Formeln: 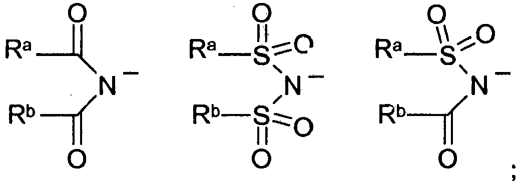 der Gruppe der Methide der allgemeinen Formel: 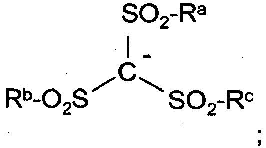 der Gruppe der Alkoxide und Aryloxide der allgemeinen Formeln: RₐO-;
der Gruppe der Halometallate der allgemeinen Formel

[MᵣHalₜ]^{s-},

wobei M für ein Metall und Hal für Fluor, Chlor, Brom oder lod steht, r und t ganze positive Zahlen sind und die Stöchiometrie des Komplexes angeben und s eine ganze positive Zahl ist und die Ladung des Komplexes angibt;
der Gruppe der Sulfide, Hydrogensulfide, Polysulfide, Hydrogenpolysulfide und Thiolate der allgemeinen Formeln:

S²⁻, HS⁻, [Sᵥ]²⁻, [HSᵥ]⁻, [R^{a}S]⁻,

wobei v eine ganze positive Zahl von 2 bis 10 ist; und
der Gruppe der komplexen Metallionen wie Fe(CN)₆³⁻, Fe(CN)₆⁴⁻, MnO₄⁻, Fe(CO)₄⁻.

In den vorstehenden Anionen bedeuten R^{a}, R^{b}, R^{c} und R^{d} unabhängig voneinander jeweils

### Wasserstoff;

C₁-C₃₀-Alkyl und deren aryl-, heteroaryl-, cycloalkyl-, halogen-, hydroxy-, amino-, carboxy-, formyl-, -O-, -CO-, -CO-O- oder -CO-N< substituierte Komponenten, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, Nonyl, Decyl, Undecyl, Dodecyl, Tridecyl, Tetradecyl, Pentadecyl, Hexadecyl, Heptadecyl, Octadecyl, Nonadecyl, Icosyl, Henicosyl, Docosyl, Tricosyl, Tetracosyl, Pentacosyl, Hexacosyl, Heptacosyl, Octacosyl, Nonäcosyl, Triacontyl, Phenylmethyl (Benzyl), Diphenylmethyl, Triphenylmethyl, 2-Phenylethyl, 3-Phenylpropyl, Cyclopentylmethyl, 2-Cyclopentylethyl, 3-Cyclopentylpropyl, Cyclohexylmethyl, 2-Cyclohexylethyl, 3-Cyclohexylpropyl, Methoxy, Ethoxy, Formyl, Acetyl oder C_{q}F_{2(q-a)+(1-b)}H_{2a+b} mit q ≤ 30, 0 ≤ a ≤ q und b = 0 oder 1 (beispielsweise CF₃, C₂F₅, CH₂CH₂-C_{(q-2)}F_{2(q-2)+1}, C₆F₁₃, C₈F₁₇, C₁₀F₂₁, C₁₂F₂₅); C₃-C₁₂-Cycloalkyl und deren aryl-, heteroaryl-, cycloalkyl-, halogen-, hydroxy-, amino-, carboxy-, formyl-, -O-, -CO- oder -CO-O-substituierte Komponenten, wie beispielsweise Cyclopentyl, 2-Methyl-1-cyclopentyl, 3-Methyl-1-cyclopentyl, Cyclohexyl, 2-Methyl-1-cyclohexyl, 3-Methyl-1-cyclohexyl, 4-Methyl-1-cyclohexyl oder C_{q}F_{2(q-a)-(1-b)}H_{2a-b} mit q ≤ 30, 0 ≤ a ≤ q und b = 0 oder 1;
C₂-C₃₀-Alkenyl und deren aryl-, heteroaryl-, cycloalkyl-, halogen-, hydroxy-, amino-, carboxy-, formyl-, -O-, -CO- oder -CO-O-substituierte Komponenten, wie beispielsweise 2-Propenyl, 3-Butenyl, cis-2-Butenyl, trans-2-Butenyl oder C_{q}F_{2(q-a)-(1-b)}H_{2a-b} mit q ≤ 30, 0 ≤ a ≤ q und b = 0 oder 1;
C₃-C₁₂-Cycloalkenyl und deren aryl-, heteroaryl-, cycloalkyl-, halogen-, hydroxy-, amino-, carboxy-, formyl-, -O-, -CO- oder -CO-O-substituierte Komponenten, wie beispielsweise 3-Cyclopentenyl, 2-Cyclohexenyl, 3-Cyclohexenyl, 2,5-Cyclohexadienyl oder C_{q}F_{2(q-a)-3(1-b)}H_{2a-3b} mit q ≤ 30, 0 ≤ a ≤ q und b = 0 oder 1;
Aryl oder Heteroaryl mit 2 bis 30 Kohlenstoffatomen und deren alkyl-, aryl-, heteroaryl-, cycloalkyl-, halogen-, hydroxy-, amino-, carboxy-, formyl-, -O-, -CO- oder -CO-O-substituierte Komponenten, wie beispielsweise Phenyl, 2-Methyl-phenyl (2-Tolyl), 3-Methyl-phenyl (3-Tolyl), 4-Methyl-phenyl, 2-Ethyl-phenyl, 3-Ethyl-phenyl, 4-Ethyl-phenyl, 2,3-Dimethyl-phenyl, 2,4-Dimethyl-phenyl, 2,5-Dimethyl-phenyl, 2,6-Dimethyl-phenyl, 3,4-Dimethyl-phenyl, 3,5-Dimethyl-phenyl, 4-Phenyl-phenyl, 1-Naphthyl, 2-Naphthyl, 1-Pyrrolyl, 2-Pyrrolyl, 3-Pyrrolyl, 2-Pyridinyl, 3-Pyridinyl, 4-Pyridinyl oder C₆F₍₅₋ₐ₎Hₐ mit 0 ≤ a ≤ 5; oder
zwei Reste einen ungesättigten, gesättigten oder aromatischens, gegebenenfalls durch funktionelle Gruppen, Aryl, Alkyl, Aryloxy, Alkyloxy, Halogen, Heteroatome und/oder Heterocyclen substituierten und gegebenenfalls durch ein oder mehrere Sauerstoff- und/oder Schwefelatome und/oder ein oder mehrere substituierte oder unsubstituierte Iminogruppen unterbrochenen Ring.

In den vorstehenden Anionen bedeuten R^{a}, R^{b}, R^{c} und R^{d} bevorzugt unabhängig voneinander jeweils ein Wasserstoffatom oder eine C₁ bis C₁₂-Alkylgruppe.

Als Anionen genannt seien z. B. Chlorid; Bromid; Iodid; Thiocyanat; Hexafluorophosphat; Trifluormethansulfonat; Methansulfonat; die Carboxylate, insbesondere Formiat; Acetat; Mandelat; Nitrat; Nitrit; Trifluoracetat; Sulfat; Hydrogensulfat; Methylsulfat; Ethylsulfat; 1-Propylsulfat; 1-Butylsulfat; 1-Hexylsulfat; 1-Octylsulfat; Phosphat; Dihydrogenphosphat; Hydrogenphosphat; C₁-C₄-Dialkylphosphate; Propionat; Tetrachloroaluminat; Al₂Cl₇-; Chlorozinkat; Chloroferrat; Bis(trifluoromethylsulfonyl)imid; Bis(pentafluoroethylsulfonyl)imid; Bis(methylsulfonyl)imid; Bis(p-Tolylsulfonyl)imid; Tris(trifluoromethylsulfonyl)methid; Bis(pentafluoroethylsulfonyl)methid; p-Tolylsulfonat; Tetracarbonylcobaltat; Dimethylenglykolmonomethylethersulfat; Oleat; Stearat; Acrylat; Methacrylat; Maleinat; Hydrogencitrat; Vinylphosphonat; Bis(pentafluoroethyl)phosphinat; Borate wie Bis[Salicylato(2-)]borat, Bis[oxalato(2-)]borat, Bis[1,2-benzoldiolato(2-)-O,O']borat, Tetracyanoborat, Tetrafluoroborat; Dicyanamid; Tris(pentafluoroethyl)trifluorophosphat; Tris(heptafluoropropyl)trifluorophosphat, cyclische Arylphosphate wie Brenzcatechol-phosphat (C₆H₄O₂)P(O)O- und Chlorocobaltat.

Besonders bevorzugte Anionen sind solche aus der Gruppe
der Alkylsulfate

R^{a}OSO₃⁻,

wobei R^{a} für eine C₁-bis C₁₂ Alkylgruppe, vorzugsweise für eine C₁-C₆ Alkylgruppe steht,
der Alkylsulfonate

R^{a}SO₃-;

wobei R^{a} für eine C₁-bis C₁₂ Alkylgruppe, vorzugsweise für eine C₁-C₆ Alkylgruppe steht,
der Halogenide, insbesondere Chlorid und Bromid und
der Pseudohalogenide, wie Thiocyanat, Dicyanamid,
In einer bevorzugten Form haben die korrespondierenden Säuren des Gegenions der Imidazoliumsalze einen pKa-Wert von kleiner 24 in DMSO bei 25 °C.

Erfindungsgemäß bevorzugt sind Carboxylatanionen, bei denen es sich um Anionen von aliphatischen oder aromatischen, bevorzugt aliphatischen Carbonsäuren handeln kann.

Beispiele für Anionen von aromatischen Carbonsäuren sind Benzoat, Salicylat und Nicotinat.

Die Alkanoatanionen, also Anionen einer Alkancarbonsäure, können geradkettig oder verzweigt, bevorzugt geradkettig sein.

Die zugrundeliegende Alkancarbonsäure weist 1 bis 20 Kohlenstoffatome auf, bevorzugt 2 bis 18 und besonders bevorzugt 2 bis 12.

Beispiele für derartige Alkanoatanionen sind Acetat, Propionat, iso-Propanoat, 2,2-Dimethylpropionat (Pivalat), n-Butanoat, iso-Butanoat, sek-Butanoat, tert-Butanoat, n-Pentanoat, n-Hexanoat, n-Heptanoat, n-Octanoat, iso-Octanoat, n-Nonanoat, iso-Nonanoat, n-Decanoat, n-Dodecanoat, Tetradecanoat, Hexadecanoat, Stearat und n-Eicosanoat, bevorzugt sind Acetat, Propionat, iso-Propanoat, iso-Butanoat, tert-Butanoat, und n-Hexanoat, besonders bevorzugt sind Acetat, Propionat, iso-Propanoat und iso-Butanoat und ganz besonders bevorzugt ist Acetat.

Die Synthese derartiger Imidazoliumionen mit Carboxylatanionen als Gegenion ist beispielsweise beschrieben in WO 2009/040242. Die Synthese der symmetrischen Imidazoliumsalze ist beispielsweise beschrieben in WO 2009/074535 A2.

Die Aufarbeitung kann beispielsweise erfolgen wie in WO 2009/027250 A2 beschrieben.

Als Beispiele für Imidazolium-Katalysatoren seien solche genannt, bei denen R² = R⁴ = R⁵ = H ist und R¹ ein n-Alkylrest der Kettenlänge a, und R³ ein n-Alkylrest der Kettenlänge c und das Anion ein Carboxylat mit einem n-Alkylrest mit in der Summe f Kohlenstoffatomen ist. Dabei seien explizit solche Katalysatoren genannt, die beschrieben werden durch a-c-f = 1-1-2; 1-3-2; 1-8-2; 1-10-2; 2-1-2; 2-2-8; 2-1-12; 2-2-2; 4-1-2; 4-4-2; 6-1-2; 6-1-12; 6-1-18; 8-1-2; 10-1-14; 10-1-16; 12-1-2; 12-1-12; 16-1-2; 16-1-8; 16-1-10; 18-1-8; 18-1-12; 18-1-14; 18-1-18.

Des Weiteren seien entsprechende Verbindungen genannt mit einem R² als ein n-Alkylrest der Kettenlänge b der Formel a-b-c-f = 1-1-1-2; 2-1-1-2; 2-2-2-2; 4-1-1-2.

Des Weiteren sei genannt: 1-Methyl-3-vinylimidazoliumalkoxylat, insbesondere 1-Methyl-3-vinylimidazolium acetat; 1-Benzyl-3-methylimidazoliumalkoxylat, insbesondere 1-Benzyl-3-methylimidazolium acetat, 1,3-Diisopropylimidazolium- und 1,2,3,4,5-Pentamethyl-imidazolium carboxylat, insbesondere acetat.

Es stellt einen Vorteil der Verbindungen (C) dar, wenn diese bei 1 bar einen Schmelzpunkt von nicht mehr als 60 °C, bevorzugt nicht mehr als 40 °C und besonders bevorzugt nicht mehr als 20 °C aufweisen.

In Lackanwendungen mit aliphatischen Polyisocyanaten sind häufig Komponenten mit niedriger Eigenfarbe bevorzugt (z.B. Klarlack). Es stellt daher einen Vorteil der Verbindungen (C) dar, wenn ihre Eigenfarbe, gegebenenfalls nach Reinigungsschritten, möglichst gering ist. In einer bevorzugten Form sind dies Jodfarbzahlen (DIN 6162) unter 20, besonders bevorzugt unter 15, ganz besonders bevorzugt unter 10, insbesondere unter 5 und speziell unter 1.

Des Weiteren kann optional noch ein Lösungsmittel oder Lösungsmittelgemisch (D) anwesend sein.

Als Lösungsmittel einsetzbar sind bevorzugt solche, in denen sich die Imidazoliumsalze bei 25 °C zu mehr als 1 Gew%, bevorzugt zu mehr als 10 Gew% lösen.

Z.B. finden Ketone, Ester, alkoxylierte Alkansäurealkylester, Ether, respektive Gemische der Lösungsmittel Verwendung.

Ester sind beispielsweise n-Butylacetat, Ethylacetat, 1-Methoxypropylacetat-2 und 2-Methoxyethylacetat.

Ether sind beispielsweise THF, Dioxan sowie die Dimethyl-, -ethyl- oder -n-butylether von Ethylenglykol, Diethylenglykol, Triethylenglykol, Propylenglykol, Dipropylenglykol oder Tripropylenglykol.

Ketone sind beispielsweise Aceton, Diethylketon, Ethylmethylketon, Isobutylmethylketon, Methylamylketon und tert-Butylmethylketon.

Bevorzugte Lösungsmittel sind n-Butylacetat, Ethylacetat, 1-Methoxypropylacetat-2, 2-Methoxyethylacetat, sowie deren Gemische.

Bei schwerer löslichen, bei Raumtemperatur festen Imidazoliumsalzen sind insbesondere Ketone wie Aceton und Ethylmethylketon als Lösungsmittel geeignet.

Weitere mögliche Lösungsmittel sind Butylglykoldiacetat (Merck Schuchardt OHG), Butylglykolacetat (Merck Schuchardt OHG), Dipropylenglycoldimethylether (Proglyde® DMM, Sigma-Aldrich, Deutschland) und Propylencarbonat.

Auch können Alkohole als Lösungsmittel eingesetzt werden, sollten aber in der Menge klein gehalten werden, insbesondere, wenn es sich um monofunktionelle Alkohole handelt.

In einer bevorzugten Variante werden die Imidazoliumsalze ohne Einsatz von Lösungsmitteln direkt in einer der Komponenten (Polyol oder Isocyanat-haltige Komponente) gelöst.

Als Lösungsmittel einsetzbar sind solche, die keine gegenüber Isocyanatgruppen oder verkappten Isocyanatgruppen reaktiven Gruppen aufweisen und in denen die Polyisocyanate zu mindestens 10 Gew%, bevorzugt zu mindestens 25, besonders bevorzugt zu mindestens 50, ganz besonders bevorzugt zu mindestens 75, insbesondere zu mindestens 90 und speziell zu mindestens 95 Gew% löslich sind.

Beispiele für derartige Lösungsmittel sind aromatische (einschließlich alkylierter Benzole und Naphthaline) und/oder (cyclo)aliphatische Kohlenwasserstoffe und deren Gemische, chlorierte Kohlenwasserstoffe, Ketone, Ester, alkoxylierte Alkansäurealkylester, Ether, respektive Gemische der Lösungsmittel.

Als aromatische Kohlenwasserstoffgemische sind solche bevorzugt, die überwiegend aromatische C₇- bis C₁₄-Kohlenwasserstoffe umfassen und einen Siedebereich von 110 bis 300 °C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend C₉ und C₁₀-Aromaten, Siedebereich etwa 154 - 178 °C,), 150 (Siedebereich etwa 182 - 207 °C) und 200 (CAS-Nr. 64742-94-5), sowie die Shellsol®-Marken der Firma Shell, Caromax® (z.B. Caromax® 18) der Firma Petrochem Carless und Hydrosol der Firma DHC (z.B. als Hydrosol® A 170). Kohlenwasserstoffgemische aus Paraffinen, Cycloparaffinen und Aromaten sind auch unter den Bezeichnungen Kristallöl (beispielsweise Kristallöl 30, Siedebereich etwa 158 -198 °C oder Kristallöl 60: CAS-Nr. 64742-82-1), Testbenzin (beispielsweise ebenfalls CAS-Nr. 64742-82-1) oder Solventnaphtha (leicht: Siedebereich etwa 155-180 °C, schwer: Siedebereich etwa 225 - 300 °C) im Handel erhältlich. Der Aromatengehalt derartiger Kohlenwasserstoffgemische beträgt in der Regel mehr als 90 Gew%, bevorzugt mehr als 95, besonders bevorzugt mehr als 98 und ganz besonders bevorzugt mehr als 99 Gew%. Es kann sinnvoll sein, Kohlenwasserstoffgemische mit einem besonders verringerten Gehalt an Naphthalin einzusetzen.

(Cyclo)aliphatische Kohlenwasserstoffe sind beispielsweise Dekalin, alkyliertes Dekalin und Isomerengemische von geradlinigen oder verzweigten Alkanen und/oder Cycloalkanen.

Der Gehalt an aliphatischen Kohlenwasserstoffen beträgt in der Regel weniger als 5, bevorzugt weniger als 2,5 und besonders bevorzugt weniger als 1 Gew%.

Ester sind beispielsweise n-Butylacetat, Ethylacetat, 1-Methoxypropylacetat-2 und 2-Methoxyethylacetat.

Ether sind beispielsweise THF, Dioxan sowie die Dimethyl-, -ethyl- oder -n-butylether von Ethylenglykol, Diethylenglykol, Triethylenglykol, Propylenglykol, Dipropylenglykol oder Tripropylenglykol.

Ketone sind beispielsweise Aceton, Diethylketon, Ethylmethylketon, Isobutylmethylketon, Methylamylketon und tert-Butylmethylketon.

Bevorzugte Lösungsmittel sind n-Butylacetat, Ethylacetat, 1-Methoxypropylacetat-2, 2-Methoxyethylacetat, sowie deren Gemische, insbesondere mit den oben aufgeführten aromatischen Kohlenwasserstoffgemischen.

Derartige Gemische können im Volumenverhältnis 5:1 bis 1:5 erstellt werden, bevorzugt im Volumenverhältnis 4:1 bis 1:4, besonders bevorzugt im Volumenverhältnis 3:1 bis 1:3 und ganz besonders bevorzugt im Volumenverhältnis 2:1 bis 1:2.

Bevorzugte Beispiele sind Butylacetat/Xylol, Methoxypropylacetat/Xylol 1:1, Butylacetat/Solventnaphtha 100 1:1, Butylacetat/Solvesso® 100 1:2 und Kristallöl 30/Shellsol® A 3:1.

Bevorzugt sind zudem aromatische Kohlenwasserstoffgemische, wie z.B. Solvesso® 100.

Des Weiteren kann optional, wenn auch weniger bevorzugt, noch mindestens ein weiterer Urethanisierungskatalysator (E) anwesend sein. Dabei kann es sich zum Beispiel um ein Amin (E1) oder eine metallorganische Verbindung (E2) halten.

Amine (E1) sind beispielsweise tertiäre aliphatische, cycloaliphatische oder aromatische Amine. Beispiele dafür sind Triethylamin, Tri-n-butylamin, N-Methylmorpholin, N-Methyl piperidin, Pyrrolidin, Chinuclidin oder 1,4-Di-aza-bicyclo-[2.2.2]-octan

Metallorganische Verbindung (E2) sind beispielsweise, wie beispielsweise Zinn-(II)-salze von organischen Carbonsäuren, z.B. Zinn-(II)-diacetat, Zinn-(II)-dioctoat, Zinn-(II)-bis(ethylhexanoat) und Zinn-(II)-dilaurat. Zudem können Zink-(II)-Salze eingesetzt werden, wie beispielsweise Zink-(II)-dioctoat. Auch Metallkomplexe wie Acetylacetonate des Eisens, Titans, Aluminiums, Zirkons, Mangans, Nickels, Zinks und Cobalts sind möglich. Weitere Metallkatalysatoren werden von Blank et al. in Progress in Organic Coatings, 1999, Vol. 35, Seiten 19-29 beschrieben.

Dialkylzinn-(IV)-salze von organischen Carbonsäuren, z.B. Dimethylzinn-diacetat, Di-butylzinn-diacetat, Dibutylzinn-dibutyrat, Dibutylzinn-bis(2-ethylhexanoat), Dibutylzinndilaurat, Dibutylzinn-maleat, Dioctylzinn-dilaurat und Dioctylzinn-diacetat sind im Rahmen einer Substitution derselbigen aus toxikologischen Gründen weniger bevorzugt.

Bevorzugte Lewis-saure organische Metallverbindungen sind Zink-(II)-dioctoat, Zirkon-Acetylacetonat und Zirkon-2,2,6,6-tetramethyl-3,5-heptandionat.

Auch Wismut-und Cobaltkatalysatoren sowie Cäsiumsalze können als Katalysatoren eingesetzt werden. Als Cäsiumsalze kommen dabei solche Verbindungen in Betracht, in denen folgende Anionen eingesetzt werden: F⁻, Cl⁻, ClO⁻, ClO₃⁻, ClO₄⁻, Br⁻, J⁻, JO₃⁻, CN⁻, OCN⁻, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht.

Bevorzugt sind dabei Cäsiumcarboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Besonders bevorzugte Cäsiumsalze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Formiat, Acetat, Propionat, Hexanoat und 2-Ethylhexanoat.

Als weitere lacktypische Komponenten und/oder Additive (F) können beispielsweise verwendet werden: Stabilisatoren, UV-Stabilisatoren wie UV-Absorber und geeignete Radikalfängern (insbesondere HALS-Verbindungen, Hindered Amin Light Stabilizer), Aktivatoren (Beschleuniger), Trockenmittel, Füllmittel, Pigmente, Farbstoffe, antistatische Agenzien, Flammschutzmittel, Verdicker, thixotrope Agenzien, oberflächenaktive Agenzien, Viskositätsmodifikatoren, Plastifizierer oder Chelatbildner. Bevorzugt sind UV-Stabilisatoren.

Stabilisatoren sind mindestens eine stabilisierend wirkende Verbindung, wobei mit "stabilisierend" die Eigenschaft bezeichnet ist, die Entwicklung einer Farbzahl und/oder der Viskosität der Komponente A im Verlauf der Lagerung über einen gewissen Zeitraum gegenüber solchen entsprechenden Mischungen zu verringern, die keine stabilisierend wirkenden Verbindungen enthalten.

Die Stabilisierung kann sich sowohl auf die Komponente (A) alleine beziehen, wie auch auf Vormischungen der Komponenten (A), (C), optional unter Zugabe weiterer Komponenten. Dies beinhaltet in einer besonderen Ausführung die Lagerung einer dieser Komponenten vor der eigentlichen Lackapplizierung.

Bevorzugt sind diese stabilisierend wirkenden Verbindungen ausgewählt aus der Gruppe bestehend aus primären Antioxidantien (Radikalfänger), sekundären Antioxidantien (Verbindungen, die die Radikalbildung verhindern, insbesondere indem sie Peroxide abfangen und/oder zersetzen) und sauren Stabilisatoren (Bronsted-Säuren).

Bei den primären Antioxidantien handelt es sich bevorzugt um sterisch gehinderte Phenole. Derartige sterisch gehinderte Phenole sind beispielsweise beschrieben in WO 2008/116894, bevorzugt die dort von Seite 14, Zeile 10 bis Seite 16, Zeile 10 beschriebenen Verbindungen, was hiermit per Bezugnahme Bestandteil der vorliegenden Offenbarung sei.

Die sekundären Antioxidantien sind bevorzugt ausgewählt aus der Gruppe-bestehend aus Phosphiten, Phosphoniten, Phosphonaten, sekundären aromatischen Aminen und Thioethern, bevorzugt aus Phosphoniten oder Phosphonaten.

Bei den Phosphiten kann es sich um aromatische, aliphatische, cycloaliphatische oder gemischt aliphatisch/aromatische Phosphite handeln, bevorzugte Phosphite sind beschrieben in WO 2005/89085, dort besonders von Seite 6, Zeile 1 bis Seite 7, Zeile 22.

Bevorzugte Phosphonite sind beschrieben in WO 2008/116894, dort besonders von Seite 11, Zeile 8 bis Seite 14, Zeile 8.

Bevorzugte Phosphonate sind beschrieben in WO 2008/116895, dort besonders von Seite 10, Zeile 38 bis Seite 12, Zeile 41.

Bevorzugte sekundäre aromatische Amine sind Diarylamine wie Diphenylamin und Phenylnaphthylamin oder Alkyldiarylamine wie Alkyldiphenylamine und Alkylphenylnaphthylamine, wobei die Alkylgruppe, beispielsweise für eine C₁ bis C₁₈ Alkylgruppe, bevorzugt für eine C₁ bis C₁₆, besonders bevorzugt eine C₁ bis C₁₄, ganz besonders bevorzugt C₁ bis C₁₂ und insbesondere C₁ bis C₁₀ Alkylgruppe steht. Eine besondere Ausführungsform stellt eine C₁ bis C₆ Alkylgruppe dar und in einer ganz besonderen Ausführungsform handelt es sich bei der Alkylgruppe um eine C₁ bis C₄ Alkylgruppe.

Bevorzugte Thioether sind beschrieben in WO 2008/116893, dort besonders von Seite 11, Zeile 1 bis Seite 15, Zeile 37.

Bei den sauren Stabilisatoren handelt es sich um Bronsted-Säuren, wie sie beschrieben sind in WO 2008/116894, dort besonders von Seite 17, Zeile 34 bis Seite 18, Zeile 23.

Trockenmittel oder Entwässerungsmittel sind Verbindungen, die bevorzugt mit Wasser reagieren können. Geeignete Trockenmittel sind beispielsweise para-Toluolsufonylisocyanat (z.B. Zusatzmittel TI der Firma Borchers), Orthoester (z.B. Zusatzmittel OF der Firma Borchers) oder Oxazolidine, z.B. die Incozol-Typen der Firma ICL (Industrial Copolymers), oder Basonat SCI der Firma BASF. Bevorzugt ist Toluolsufonylisocyanat.

Die Anwesenheit von Trockenmittel kann insbesondere in einer PolyisocyanatKomponente bzw. einer Imidazoliumkatalysatoren enthaltenden Komponente von Vorteil sein.

Geeignete UV-Absorber umfassen Oxanilide, Triazine und Benzotriazol (letztere erhältlich z.B. als Tinuvin® -Marken der Ciba Spezialitätenchemie) und Benzophenone (z.B. Chimassorb® 81 der Ciba Spezialitätenchemie). Bevorzugt sind z.B. 95 % Benzolpropansäure, 3-(2H-Benzotriazol-2-yl)-5-(1,1-dimethylethyl)-4-hydroxy-, C7-9-verzweigte und lineare Alkylester; 5 % 1-Methoxy-2-propylacetat (z.B. Tinuvin® 384) und α-[3-[3-(2H-Benzotriazol-2-yl)-5-(1,1,-dimethylethyl)-4-hydroxyphenyl]-1-oxopropyl]-ω-hydroxypoly(oxo-1,2-ethanediyl) (z.B. Tinuvin® 1130), jeweils Produkte z.B. der Ciba Spezialitätenchemie. DL-Alpha-Tocopherol, Tocopherol, Zimtsäurederivate und Cyanoacrylate können ebenfalls zu diesem Zweck eingesetzt werden.

Diese können allein oder zusammen mit geeigneten Radikalfängern, beispielsweise sterisch gehinderten Aminen (oft auch als HALS -oder HAS-Verbindungen, bezeichnet; Hindered Amine (Light) Stabilizer) wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden. Diese sind z.B. erhältlich als Tinuvin®- und Chimassorb®-Marken der Ciba Spezialitätenchemie. Bevorzugt im gemeinsamen Einsatz mit Lewis-Säuren sind jedoch solche gehinderten Amine, die N-alkyliert sind, beispielsweise Bis (1,2,2,6,6-pentamethyl-4-piperidinyl)-[[3,5-bis(1,1-dimethylethyl)-4-hydroxyphenyl]methyl]butylmalonat (z.B. Tinuvin® 144 der Ciba Spezialitätenchemie); eine Mischung aus Bis(1,2,2,6,6-Pentamethyl-4-Piperidinyl)sebacat und Methyl(1,2,2,6,6-Pentamethyl-4-Piperidinyl)sebacat (z.B. Tinuvin® 292 der Ciba Spezialitätenchemie); oder die N-(O-alkyliert) sind, wie z.B. Dekandisäure,bis(2,2,6,6-tetramethyl-1-(octyloxy)-4-piperidinyl)ester, Reaktionsprodukte mit 1,1-Dimethylethylhydroperoxyd und Oktan (z.B. Tinuvin® 123 der Ciba Spezialitätenchemie).

UV-Stabilisatoren werden üblicherweise in Mengen von 0,1 bis 5,0 Gew.-%, bezogen auf die in der Zubereitung enthaltenen festen Komponenten, eingesetzt.

Als Verdicker kommen neben radikalisch (co)polymerisierten (Co)Polymerisaten, übliche organische und anorganische Verdicker wie Hydroxymethylcellulose oder Bentonit in Betracht.

Als Chelatbildner können z.B. Ethylendiaminessigsäure und deren Salze sowie β-Diketone verwendet werden.

Pigmente im eigentlichen Sinne sind gemäß CD Römpp Chemie Lexikon - Version 1.0, Stuttgart/New York: Georg Thieme Verlag 1995 unter Verweis auf DIN 55943 partikelförmige "im Anwendungsmedium praktisch unlösliche, anorganische oder organische, bunte oder unbunte Farbmittel".

Praktisch unlöslich bedeutet dabei eine Löslichkeit bei 25 °C unter 1 g / 1000 g Anwendungsmedium, bevorzugt unter 0,5, besonders bevorzugt unter 0,25, ganz besonders bevorzugt unter 0,1 und insbesondere unter 0,05 g / 1000 g Anwendungsmedium.

Beispiele für Pigmente im eigentlichen Sinne umfassen beliebige Systeme von Absorptions- und/oder Effektpigmenten, bevorzugt Absorptionspigmente. Anzahl und Auswahl der Pigmentkomponenten sind dabei keinerlei Beschränkungen unterworfen. Sie können den jeweiligen Erfordernissen, beispielsweise dem gewünschten Farbeindruck, beliebig angepaßt werden, beispielsweise wie in Schritt a) beschrieben. Beispielsweise können alle Pigmentkomponenten eines standardisierten Mischlacksystems zugrunde liegen.

Unter Effektpigmenten sind alle Pigmente zu verstehen, die einen plättchenförmigen Aufbau zeigen und einer Oberflächenbeschichtung spezielle dekorative Farbeffekte verleihen. Bei den Effektpigmenten handelt es sich beispielsweise um alle in der Fahrzeug- und Industrielackierung üblicherweise einsetzbaren effektgebenden Pigmente. Beispiele für derartige Effektpigmente sind reine Metallpigmente; wie z.B. Aluminium-, Eisen- oder Kupferpigmente; Interferenzpigmente, wie z.B. titandioxidbeschichteter Glimmer, eisenoxidbeschichteter Glimmer, mischoxidbeschichteter Glimmer (z.B. mit Titandioxid und Fe₂O₃ oder Titandioxid und Cr₂O₃), metalloxidbeschichtetes Aluminium, oder Flüssigkristallpigmente.

Bei den farbgebenden Absorptionspigmenten handelt es sich beispielsweise um übliche in der Lackindustrie einsetzbare organische oder anorganische Absorptionspigmente. Beispiele für organische Absorptionspigmente sind Azopigmente, Phthalocyanin-, Chinacridon- und Pyrrolopyrrolpigmente. Beispiele für anorganische Absorptionspigmente sind Eisenoxidpigmente, Titandioxid und Ruß.

Farbstoffe sind ebenfalls Farbmittel und unterscheiden sich von den Pigmenten durch ihre Löslichkeit im Anwendungsmedium, d.h. sie weisen bei 25 °C eine Löslichkeit über 1 g / 1000 g im Anwendungsmedium auf.

Beispiele für Farbstoffe sind Azo-, Azin-, Anthrachinon-, Acridin-, Cyanin-, Oxazin-, Polymethin-, Thiazin-, Triarylmethan-Farbstoffe. Diese Farbstoffe können Anwendung finden als basische oder kationische Farbstoffe, Beizen-, Direkt-, Dispersions-, Entwicklungs-, Küpen-, Metallkomplex-, Reaktiv-, Säure-, Schwefel-, Kupplungs- oder Substantive Farbstoffe.

Als koloristisch inerte Füllstoffe sind alle Stoffe/Verbindungen zu verstehen, die einerseits koloristisch unwirksam sind; d.h. die eine geringe Eigenabsorption zeigen und deren Brechzahl ähnlich der Brechzahl des Beschichtungsmediums ist, und die andererseits in der Lage sind, die Orientierung (parallele Ausrichtung) der Effektpigmente in der Oberflächenbeschichtung, d.h. im applizierten Lackfilm, zu beeinflussen, ferner Eigenschaften der Beschichtung oder der Beschichtungsmassen, beispielsweise Härte oder Rheologie. Im Folgenden sind beispielhaft einsetzbare inerte Stoffe/Verbindungen genannt, ohne jedoch den Begriff koloristisch inerte topologiebeeinflussende Füllstoffe auf diese Beispiele zu beschränken. Geeignete inerte Füllstoffe entsprechend der Definition können beispielsweise transparente oder semitransparente Füllstoffe oder Pigmente sein, wie z.B. Kieselgele, Blancfixe, Kieselgur, Talkum, Calciumcarbonate, Kaolin, Bariumsulfat, Magnesiumsilikat, Aluminiumsilikat, kristallines Siliziumdioxid, amorphe Kieselsäure, Aluminiumoxid, Mikrokugeln oder Mikrohohlkugeln z.B. aus Glas, Keramik oder Polymeren mit Größen von beispielsweise 0,1-50 µm. Weiterhin können als inerte Füllstoffe beliebige feste inerte organische Partikel, wie z.B. Harnstoff-Formaldehyd-Kondensationsprodukte, mikronisiertes Polyolefinwachs und mikronisiertes Amidwachs, eingesetzt werden. Die inerten Füllstoffe können jeweils auch in Mischung eingesetzt werden. Bevorzugt wird jedoch jeweils nur ein Füllstoff eingesetzt.

Bevorzugte Füllstoffe umfassen Silikate, z. B. durch Hydrolyse von Siliciumtetrachlorid erhältliche Silikate wie Aerosil® der Fa. Degussa, Kieselerde, Talkum, Aluminiumsilikate, Magnesiumsilikate, Calciumcarbonate etc.

Die erfindungsgemäßen Polyisocyanatzusammensetzungen sind beispielsweise wie folgt zusammengesetzt:
(A) 5 bis 60 Gew%, bevorzugt 10 bis 50 Gew%, besonders bevorzugt 10-30 Gew%,
(B) 10 bis 80 Gew%, bevorzugt 20 bis 60 Gew%,
(C) 10 bis 20000 Gew.ppm, bevorzugt 50 bis 10000, besonders bevorzugt 300 bis 4000 und ganz besonders bevorzugt 1000 bis 3000 Gew.ppm,
(D) 0 bis 80, bevorzugt 10-70 %, besonders bevorzugt 20 bis 60 Gew%,
(E) 0-10000 Gew.ppm, bevorzugt 10 bis 5000 Gew.ppm, bevorzugt 20 bis 1000 Gew.ppm
(F) 0-5 % Komponenten und/oder Additive.
mit der Maßgabe, dass die Summe dieser Komponenten, jedoch ohne die der Füllstoffe, Farbmittel und Pigmente mitzuzählen, immer 100 Gew% beträgt.

In den Beschichtungsmassen werden Polyisocyanatzusammensetzung (A) und Bindemittel (B) in einem Molverhältnis von Isocyanatgruppen zu gegenüber Isocyanat reaktiven Gruppen von 0,1:1 bis 10:1, bevorzugt 0,2:1 bis 5:1, besonders bevorzugt 0,3:1 bis 3:1, ganz besonders bevorzugt 0,5:1 bis 2:1, insbesondere 0,8:1 bis 1,2:1 und speziell 0,9:1 bis 1,1:1 miteinander vermischt, wobei optional noch weitere lacktypische Bestandteile eingemischt werden können, und auf das Substrat aufgetragen.

Dabei kann optional eine Vormischung, optional Lagerung einer Polyisocyanat bzw. einer Polyol-Komponente erfolgen, z.B.
- (A) mindestens ein Polyisocyanat, erhältlich durch Umsetzung mindestens eines monomeren Isocyanats,
- (C) mindestens ein Imidazoliumsalz gemäß einem der Ansprüche 1 oder 5 bis 8,
- (D) optional mindestens ein Lösungsmittel,
- (E) optional mindestens einen anderen Urethanisierungskatalysator als (C), sowie,
- (F) optional andere lacktypische Komponenten und/oder Additive.

Diese Vormischung wird dann kurz vor dem Aufbringen auf das Substrat mit der Polyolkomponente (B) vermischt.

Oder alternativ:
- (B) mindestens eine Verbindung, die mindestens zwei gegenüber Isocyanat reaktive Gruppen, eine zahlenmittleres Molekulargewicht Mn von mindestens 1000 g/mol und eine OH-Zahl von 40 bis 350 mg KOH/g aufweist,
- (C) mindestens ein Imidazoliumsalz gemäß einem der Ansprüche 1 oder 5 bis 8,
- (D) optional mindestens ein Lösungsmittel,
- (E) optional mindestens einen anderen Urethanisierungskatalysator als (C), sowie,
- (F) optional andere lacktypische Komponenten und/oder Additive.

Diese Vormischung wird dann kurz vor dem Aufbringen auf das Substrat mit der Polyisocyanatkomponente (A) vermischt.

Unter "kurz vor dem Aufbringen" wird dabei verstanden, daß Vormischung und fehlende Komponente in einem Zeitraum vor dem Aufbringen auf das Substrat miteinander vermischt werden, innerhalb dessen eine problemlose Verarbeitbarkeit gewährleistet ist, d.h. die Beschichtungsmasse ist nach wie vor fließfähig und applizierbar. Naturgemäß beträgt der Zeitraum weniger als die Gelzeit.

Anschließend wird bei Umgebungstemperatur bis 150 °C das Lackgemisch ausgehärtet.

In einer bevorzugten Variante wird das Lackgemisch bei 20 bis 80 °C, besonders bevorzugt bis 60 °C ausgehärtet (z.B. für refinish-Anwendungen oder große Objekte, die sich schlecht in einen Ofen stellen lassen).

In einer anderen bevorzugten Anwendung wird das Lackgemisch bei 110-150 °C, bevorzugt bei 120-140 °C ausgehärtet (z.B. für OEM-Anwendungen).

Unter "Härtung" wird im Rahmen der vorliegenden Erfindung das Erzeugen einer klebfreien Beschichtung auf einem Substrat verstanden, indem man die auf das Substrat aufgetragene Beschichtungsmasse zumindest solange auf die oben angegebene Temperatur erwärmt, bis mindestens die gewünschte Klebfreiheit eingetreten ist.

Unter einer Beschichtungsmasse wird im Rahmen der vorliegenden Schrift eine Mischung zumindest der Komponenten (A) und (B) verstanden, die zum Beschichten mindestens eines Substrats zum Zwecke einer Ausbildung eines Films und, nach Härtung, einer klebfreien Beschichtung vorgesehen ist.

Die Beschichtung der Substrate erfolgt nach üblichen, dem Fachmann bekannten Verfahren, wobei man wenigstens eine Beschichtungsmasse auf das zu beschichtende Substrat in der gewünschten Stärke aufbringt und die optional enthaltenen flüchtigen Bestandteile der Beschichtungsmasse, optional unter Erhitzen, entfernt. Dieser Vorgang kann gewünschten falls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Coextrudieren erfolgen.

Die Dicke einer solchen zu härtenden Schicht kann von 0,1 µm bis mehrere mm betragen, bevorzugt von 1 bis 2.000 µm, besonders bevorzugt 5 bis 200 µm, ganz besonders bevorzugt von 5 bis 60 µm (bezogen auf den Lack im Zustand in dem das Lösungsmittel aus dem Lack entfernt ist).

Weiterhin sind auch Substrate, beschichtet mit einer erfindungsgemäßen Mehrschichtlackierung Gegenstand der vorliegenden Erfindung.

Besonders geeignet sind solche Polyurethanlacke für Anwendungen, in denen eine besonders hohe Applikationssicherheit, Außenwitterungsbeständigkeit, Optik, Lösemittel-, Chemikalien- und Wasserfestigkeit gefordert werden.

Die erhaltenen zweikomponentigen Beschichtungsmassen und Lackformulierungen eignen sich zum Beschichten von Substraten wie Holz, Holzfurnier, Papier, Pappe, Karton, Textil, Folie, Leder, Vlies, Kunststoffoberflächen, Glas, Keramik, mineralischen Baustoffen, wie Zement-Formsteine und Faserzementplatten oder Metallen, die jeweils optional vorbeschichtet bzw. vorbehandelt sein können.

Derartige Beschichtungsmassen eignen sich als oder in Innen- oder Außenbeschichtungen, also solche Anwendungen, die dem Tageslicht ausgesetzt sind, bevorzugt von Gebäudeteilen, Beschichtungen auf (Groß-)Fahrzeugen und Flugzeugen und industriellen Anwendungen, Nutzfahrzeuge im landwirtschaftlichen und Baubereich, Dekolackierungen, Brücken, Gebäuden, Strommasten, Tanks, Containern, Pipelines, Kraftwerken, chemischen Anlagen, Schiffen, Kränen, Pfählen, Spundwänden, Armaturen, Rohren, Fittings, Flanschen, Kupplungen, Hallen, Dächern und Baustahl, Möbeln, Fenstern, Türen, Parkett, Can-Coating und Coil-Coating, für Bodenbeläge, wie bei Parkdecks oder in Krankenhäusern in Automobillacken als OEM und refinish-Anwendung.

Bevorzugt werden derartige Beschichtungsmassen bei Temperaturen zwischen Umgebungstemperatur bis 80 °C, bevorzugt bis 60 °C, besonders bevorzugt bis 40 °C eingesetzt. Bevorzugt handelt es sich dabei um solche Gegenstände, die nicht bei hohen Temperaturen gehärtet werden können, wie große Maschinen, Flugzeuge, Großraumfahrzeuge und refinish-Anwendungen.

Insbesondere werden die erfindungsgemäßen Beschichtungsmassen als Klar-, Basis- und Decklacke(n), Primem und Füllern eingesetzt.

Ein weiterer Gegenstand der vorliegenden Erfindung ist die Verwendung von Imidazoliumlonen gemäß Formel (I) als Katalysatoren für die Härtung von Gemischen enthaltend mindestens ein Polyisocyanat und mindestens eine Verbindung, die gegenüber Isocyanat reaktive Gruppen aufweist.

### Beispiele

Joncryl® 507, ein acrylatbasiertes Polyol der BASF SE der OH-Zahl 140 mg KOH/g (80% in Butylacetat) wurde mit einem 1,6-Hexamethylendiisocyanat-basierten Isocyanurat (Basonat® HI 100 der BASF SE, NCO-Gehalt 22,0%) in stöchiometrischem Verhältnis gemischt und mit Butylacetat auf eine Applikationsviskosität von 20 sec Auslaufzeit im DIN4-Becher eingestellt. Zur Prüfung der Gelzeit wurden 0,5 Gew% des Katalysators (bezogen auf die Gesamtformulierung) zugegeben, zur Prüfung der Pendelhärte wurden 0,2 Gew% der Katalysatoren zugegeben. Bei dem Vergleichsversuch mit DBTL wurden wegen der höheren Aktivität von DBTL niedrigere Mengen Katalysator zugegeben, je 0,025 % für die Gelierzeit und die Pendelhärte. Der Vergleichsversuch mit DBTL weist eine vergleichbare Gelierzeit auf wie die erfindungsgemäßen Beispiele. Durch die Wahl der gleichen Menge DBTL bei Gelzeit und Pendelhärte wird man davon ausgehen können, dass die Pendelhärte mit DBTL aufgrund beschleunigter Härtung sogar relativ besser abschneiden sollte als wenn die Menge entsprechend den erfindungsgemäßen Beispielen reduziert würde.

Die festen Produkte 1,3-Diisopropylimidazolium-acetat und 1,2,3,4,5-Pentamethylimidazolium-acetat wurden grundsätzlich als 10%ige Lösungen in Aceton eingesetzt.

Die Einwaage der Lackkomponenten ist in den folgenden Tabellen, soweit nicht anders bezeichnet, in Gramm angegeben, Prozentangaben in dieser Schrift beziehen sich, soweit nicht anders angegeben, auf Gew%.

Die Prüfung der Gelzeit der eingesetzten Katalysatoren erfolgte bei 23 °C. Ermittelt wurde die Zeit bis zum Durchgelieren des Ansatzes.

Schichtdicken aller Lacke betrugen 35-45 Mikrometer (bezogen auf den trockenen Lackfilm).

Die Prüfung der Pendelhärte der folgenden Lacke (Tabelle 1) erfolgte nach Einbrennen bei 60°C für 30 Minuten nach DIN 53 157 und Lagerung für 24 Stunden bei 23°C.

1-Ethyl-3-methlyimidazolium wird im Folgenden durch EMIM abgekürzt.

**Tabelle 1:**

| | Vgl.1 | Vgl.2 | Bsp.1 | Bsp.2 | Bsp.3 | Bsp.4 | Bsp.5 | Bsp.6 | Bsp.7 | Bsp.8 |
|---|---|---|---|---|---|---|---|---|---|---|
| Basonat HI 100 | 5,72 | 5,72 | 5,72 | 5,72 | 5,72 | 5,72 | 5,72 | 5,72 | 5,72 | 5,72 |
| Joncryl 507 | 15,0 | 15,0 | 15,0 | 15,0 | 15,0 | 15,0 | 15,0 | 15,0 | 15,0 | 15,0 |
| Butylacetat | 7,6 | 7,6 | 7,6 | 7,6 | 7,6 | 7,6 | 7,6 | 7,6 | 7,6 | 7,6 |
| DBTL | | 0,025/ 0,025 | | | | | | | | |
| EMIM Octanoat | | | 0,142/ 0,057 | | | | | | | |
| EMIM Nonanoat | | | | 0,142/0,057 | | | | | | |
| EMIM Iso-nonanoat | | | | | 0,142/ 0,057 | | | | | |
| 1,3-Diethylimidazolium-acetat | | | | | | 0,142/ 0,057 | | | | |
| 1,3-Dihexyl-imidazolium-acetat | | | | | | | 0,142/ 0,057 | | | |
| 1,3-Di-n-butyl-imidazolium-acetat | | | | | | | | 0,142/ 0,057 | | |
| 1,3-Diisopropyl-imidazolium-acetat | | | | | | | | | 1,415/ 0,566 | |
| 1,2,3,4,5-Pentamethyl-imidazolium-acetat | | | | | | | | | | 1,415/ 0,566 |
| | | | | | | | | | | |
| Gelierzeit (h:min) | > 7 Tage | 0:39 | 1:14 | 1:18 | 1:13 | 1:06 | 1:55 | 1:38 | 1:09 | 1:03 |
| Pendelhärte (Schläge) | klebt | 36 | 55 | 57 | 58 | 68 | 50 | 50 | 66 | 86 |
| Aussehen Lack | OK | OK | OK | OK | OK | OK | OK | OK | OK | OK |

Bei vergleichbaren Gelierzeiten von ca. 1:00-1:20 Stunden klebt der Lack des unkatalysierten Vergleichsbeispiels.

Das Vergleichsbeispiel mit DBTL als Katalysator weist eine niedrigere Pendelhärte auf als die Beispiele mit Imidazoliumcarboxylaten als Katalysator. Diese zeigen bei Raumtemperatur ein besseres Härtungsverhalten als DBTL als Katalysator.

Eine schnelle Härtung bei niedrigen Temperaturen ist für viele Lackanwendungen wichtig. Zum einen bleibt die Lackoberfläche sauberer (Staubtrocken, Wattetest s.u.). Außerdem wird die Lagerzeit bis zu einer Weiterverarbeitung beschleunigt. Die Bauteile können früher angefasst oder gestapelt werden. Alternativ kann bei niedrigeren Temperaturen gehärtet und so Energie gespart werden.

In einer zweiten Versuchsserie wurde ebenfalls Joncryl® 507 mit dem 1,6-Hexamethylendiisocyanat-basierten Isocyanurat (Basonat® HI 100 der BASF SE, NCO-Gehalt 22,0%) in stöchiometrischem Verhältnis gemischt und mit Butylacetat auf eine Applikationsviskosität von 20 sec Auslaufzeit im DIN4-Becher eingestellt. Dabei wurde die Gelzeit mit Hilfe der Katalysatoren auf ca. vier Stunden eingestellt (Mengen bezogen auf die Gesamtformulierung). Der nichtflüchtige Anteil betrug 62,6 %, die Auslaufzeit ca. 20 Sekunden. Die Lacke wurden bei 23 +/- 2 °C, 50 +/- 5 % Luftfeuchte ausgehärtet (Normklima 23/50).

**Tabelle 2, Härtung bei Raumtemperatur:**

| Beispiel | 9 | 10 | 11 | 12 | 13 | 14 | 15 | 16 | 17 | 18 | Vgl. 3 |
|---|---|---|---|---|---|---|---|---|---|---|---|
| Katalysatormenge [%] | 0,20 | 0,225 | 0,225 | 0,225 | 0,225 | 0,20 | 0,30 | 0,275 | 0,225 | 0,175 | 0,006 |
| | | | | | | | | | | | |
| Basonat HI 100 | 11,43 | 11,43 | 11,43 | 11,43 | 11,43 | 11,43 | 11,43 | 11,43 | 11,43 | 11,43 | 11,43 |
| EMIM-Acetat | 0,11 | | | | | | | | | | |
| EMIM Heptanoat | | 0,13 | | | | | | | | | |
| EMIM Octanoat | | | 0,13 | | | | | | | | |
| EMIM Nonanoat | | | | 0,13 | | | | | | | |
| EMIM iso Nonanoat | | | | | 0,13 | | | | | | |
| 1,3-Diethylimidazolium-acetat | | | | | | 0,11 | | | | | |
| 1,3-Dihexylimidazoliumacetat | | | | | | | 0,17 | | | | |
| 1,3-Di n Butylimidazolium-acetat | | | | | | | | 0,16 | | | |
| 1,3-Diisopropylimidazolium-acetat (10 % in Aceton) | | | | | | | | | 1,3 | | |
| 1,2,3,4,5-Pentamethyl-imidazolium-acetat (10 % in Aceton) | | | | | | | | | | 1,00 | |
| DBTL | | | | | | | | | | | 0,035 |
| Joncryl 507 | 30,00 | 30,00 | 30,00 | 30,00 | 30,00 | 30,00 | 30,00 | 30,00 | 30,00 | 30,00 | 30,00 |
| Butylacetat | 15,20 | 15,25 | 15,25 | 15,25 | 15,25 | 15,20 | 15,25 | 15,25 | 14,10 | 14,30 | 15,15 |
| | | | | | | | | | | | |
| Gelierzeit (h:min) | 03:24 | 03:30 | 03:45 | 03:54 | 03:51 | 03:30 | 03:52 | 03:20 | 03:14 | 03:53 | 04:06 |
| Aussehen des Lacks | klar | klar | klar | klar | klar | klar | klar | klar | klar | klar | klar |
| Pendelhärte (Schläge): | | | | | | | | | | | |
| 4 Stunden | 5 | 3 | 3 | 3 | 2 | 5 | 4 | 4 | 4 | 2 | 3 |
| 6 Stunden | 25 | 15 | 11 | 8 | 8 | 20 | 18 | 14 | 21 | 5 | 3 |
| 24 Stunden | 42 | 49 | 53 | 53 | 52 | 42 | 46 | 49 | 41 | 47 | 6 |

Bei den Versuchen der zweiten Serie mit Gelzeiten um die vier Stunden zeigt sich bei Aushärtung bei Raumtemperatur, dass die Pendelhärten der Beispiele mit den Imidazoliumkatalysatoren nach sechs bis vierundzwanzig Stunden Härtung besser sind als in der Referenz mit DBTL.

Eine dritte Versuchsserie wurde analog der zweiten durchgeführt, jedoch mit einer Härtung von 30 Minuten bei 40 °C (Beispiele 9B bis 18B und Vergleichsbeispiel 3B, s. Tabelle 3). Die Lacke wurden 24 Stunden bei Normklima 23/50 nachgelagert. Die Zusammensetzung der Beispiele und des Vergleichsbeispiels entspricht der der Muster der Tabelle 2.

**Tabelle 3: Härtung bei 40 °C**

| Beispiel | 9B | 10B | 11B | 12B | 13B | 14B | 15B | 16B | 17B | 18B | Vgl. 3B |
|---|---|---|---|---|---|---|---|---|---|---|---|
| Pendelhärte (Schläge): | | | | | | | | | | | |
| + 24 Stunden | 62 | 72 | 73 | 75 | 71 | 71 | 72 | 67 | 65 | 76 | 8 |

Bei den Versuchen der dritten Serie zeigt sich bei Aushärtung bei 40 °C und Nachlagerung bei Raumtemperatur, dass die Pendelhärten der Beispiele mit den Imidazoliumkatalysatoren (Versuche 9B-18B) noch 24 Stunden nach der 40 °C-Härtung deutlich besser sind als beim Vergleichsversuch mit DBTL.

Eine vierte Versuchsserie wurde analog der zweiten durchgeführt, jedoch mit einer Härtung von 30 Minuten bei 60 °C (Beispiele 9C bis 18C und Vergleichsbeispiel 3C, s. Tabelle 4). Die Lacke wurden bei Normklima 23/50 für 24 Stunden nachgelagert. Die Zusammensetzung entspricht der der Muster der Tabelle 2.

**Tabelle 4: Härtung bei 60 °C**

| Beispiel | 9C | 10C | 11C | 12C | 13C | 14C | 15C | 16C | 17C | 18C | Vgl. 3C |
|---|---|---|---|---|---|---|---|---|---|---|---|
| Pendelhärte (Schläge): | | | | | | | | | | | |
| + 24 Stunden | 70 | 71 | 71 | 68 | 70 | 69 | 68 | 65 | 84 | 84 | 15 |
| + 7 Tage | 104 | 100 | 101 | 104 | 100 | 99 | 99 | 88 | 100 | 102 | 88 |
| + 7 Tage + 15 Std 60 °C | 106 | 103 | 104 | 104 | 102 | 100 | 101 | 89 | 103 | 106 | 100 |

Bei den Versuchen der vierten Serie zeigte sich dass die Pendelhärten bei den Imidazoliumkatalysatoren (Versuche 9C-18C) noch 24 Stunden nach der 60 °C-Härtung deutlich besser sind als der Vergleichsversuch Vgl. 3C mit DBTL.

Bei den Versuchen der fünften Serie (s. Tabelle 5) wurden Muster analog obiger Ansätze der Tabelle 2 bei 23°C ausgehärtet. Das Härtungsverhalten wurde bestimmt in Form des Wattetests, der Sandtrocknung und der Durchtrocknung.

Das Ermittlung des Härtungsverhaltens nach dem Wattetest erfolgte bei 23°C. Ermittelt wurde die Zeit, bis beim Berühren des frisch aufgezogenen Lacks mit Watte kein sichtbarer Effekt auf der Lackoberfläche hinterlassen wurde. Dieser Messwert wird häufig mit der Staubtrockenzeit gleichgesetzt.

Die Ermittlung des Härtungsverhaltens nach dem Sandtest und die Durchtrocknung erfolgten bei Normklima 23/50. Für die Messung der Durchtrocknungszeit laufen zwei Rädchen über ein frisch lackiertes Blech. Die Rädchen haben einen Durchmesser von 19-20 mm und eine Breite von 0,3 mm. Durch die Auflage eines Trichters (107-117 g Eigengewicht mit 60-80 g Sand) auf den je zwei Rädchen entsteht bei einer Relativbewegung eine breite Vertiefung im Lackfilm. Der Lack wird direkt nach Aufziehen mit einer Geschwindigkeit von 1 cm/h unter den Rädchen entlang gezogen. Der Lackfilm hat die Durchtrocknungszeit erreicht, sobald keine deutliche Spur mehr zu erkennen ist bzw. die Spur für mehrere Zentimeter unterbrochen ist. Kürzere Durchtrocknungszeiten sind gut, längere schlecht.

Sandtrockenzeit ist im gleichen Test die Zeitspanne nach Aufzug des Lackes, nach der kein Sand durch sein Eigengewicht mehr am Lack haften bleibt, wenn sehr vorsichtig mit einem Pinsel über den Lack mit Sand gepinselt wird. Kürzere Sandtrocknungszeiten sind gut, längere schlecht.

**Tabelle 5: Wattetest, Sandtrocknung, Durchtrocknung, Härtung bei 23°C**

| Beispiel | 9D | 11D | 14D | 17D | 18D | Vgl. 3D |
|---|---|---|---|---|---|---|
| | | | | | | |
| Gelierzeit 23°C [h:min] | 3:35 | 3:43 | 3:39 | 3:32 | 4:04 | 4:11 |
| Wattetest (Minuten) | 150 | 195 | 165 | 155 | 180 | >480 |
| Sandtrockung (Stunden) | 2,5 | 3,0 | 2,5 | 2,5 | 3,25 | 11,25 |
| Durchtrocknung (Stunden) | 4,5 | 4,25 | 4,0 | 4,0 | 5,25 | 15,75 |

In allen Trocknungszeiten sind die Beispielsproben deutlich besser als das Vergleichsbeispiel Vgl. 3D mit DBTL als Katalysator.

Bei den Versuchen der sechsten Serie (s. Tabelle 6) wurden Muster analog obiger Ansätze der Tabelle 2 dreißig Minuten bei 60 °C ausgehärtet. Nach vierundzwanzig Stunden bei Raumtemperatur wurden der Gitterschnitt, der Acetontest und ein Kratztest durchgeführt.

Vergleichsbeispiel Vgl. 4E entspricht Vergleichsbeispiel Vgl. 3E, enthält jedoch etwa die vierfache Menge an Katalysator DBTL.

Die Haftung mit Gitterschnitt wurde nach DIN 53151 bestimmt. Die Note 0 bezeichnet die Bestnote, die Note 5 die schlechteste Note.

Aceton-Doppelhub-Test: Mit einem Aceton-getränkten Wattebausch wurde so lang per Hand auf dem gehärteten Lack mit Doppelhüben gerieben bis die Lackschicht bis auf das Blech durchgerieben war. Die Anzahl der dafür nötigen Doppelhübe ist angegeben. Bei hundert Hüben wurde der Versuch abgebrochen.

Die Kratzfestigkeit wurde wie folgt bestimmt: an einem 500 g Schlosserhammer wurde am Kopf mit doppelseitigem Klebeband ein Faservlies (Scotchbrite®, 7448 Typ S ultrafine) angebracht. Der Hammer wurde mit zwei Fingern am Stielende gehalten und mit gleichmäßigen Doppelhüben ohne Verkanten und ohne zusätzliche Druckaufbringung auf einer Linie über den Lackfilm vor- und zurückbewegt. Nach 50 Doppelhüben, anschließender Temperierung für 60 Minuten im Umluftofen bei 60 °C (Reflow) und Lagerung für 4 h bei Normklima 23/50 wurde der Glanz quer zur Scheuer-Richtung bestimmt. Das Faservlies wurde jeweils nach dem Test gegen ein neues Vlies ausgetauscht.

Die Glanzmessung erfolgte mit einem Glanzmessgerät Mikro TRI-Gloss bei 60° Einfallwinkel.

**Tabelle 6: Gitterschnitt, Acetontest, Kratztest bei 60 °C-Härtung**

| Beispiel | 9E | 11E | 14E | 17E | 18E | Vgl. 3E | Vgl. 4E |
|---|---|---|---|---|---|---|---|
| Katalysatormenge [%] | 0,20 | 0,225 | 0,20 | 0,225 | 0,175 | 0,006 | 0,025 |
| | | | | | | | |
| Gelierzeit 23°C [h:min] | 3:35 | 3:43 | 3:39 | 3:32 | 4:04 | 4:11 | 0:41 |
| Gitterschnitt (Note) | 0 | 0 | 0 | 0 | 0 | 0 | 0 |
| Acetontest (Doppelhübe) | >100 | >100 | >100 | >100 | >100 | >100 | >100 |
| Kratztest, Glanz direkt | 99 | 99 | 99 | 99 | 98 | 98 | 98 |
| Glanz nach 50 Doppelhüben | 8 | 9 | 7 | 20 | 15 | 3 | 13 |
| Glanz nach reflow | 9 | 9 | 7 | 20 | 18 | 4 | 11 |

Gitterschnitt, Acetontest und Anfangsglanz der Beispiele mit Imidazoliumkatalysatoren sind genauso gut wie bei dem mit DBTL Vgl. 3E katalysierten System. Die Kratzfestigkeiten der Ansätze mit Imidazoliumkatalysatoren sind für alle Proben bei allen Messpunkten deutlich besser als im Vergleichsbeispiel Vgl. 3E mit DBTL.

Beim Vergleichsbeispiel Vgl. 4E mit einer deutlich höheren Menge an Katalysator DBTL als im Vergleichsbeispiel Vgl. 3E, und damit sehr deutlich reduzierter Gelzeit wird zwar die Kratzfestigkeit verbessert, jedoch ist die Kratzfestigkeit immer noch deutlich schlechter als in den Beispielen 17E und 18E, und nur marginal besser als in den Beispielen 9E, 11 E und 14E.

Bei den Versuchen der siebten Serie wurden Muster analog obiger Ansätze der Tabelle 2 dreißig Minuten bei 80 °C ausgehärtet. Nach weiteren vierundzwanzig Stunden bei Raumtemperatur wurden Pendelhärte, Erichsen-Tiefung, Gitterschnitt, Acetontest, Kratzfestigkeit und ein etch-test durchgeführt.

Die Ermittlung der Erichsen-Tiefung erfolgte analog DIN 53156 in Millimeter. Dabei wurde die Erichsen-Tiefung durch Eindrücken einer Metallkugel bis zum Reißen des Lacks bestimmt. Hohe Werte bedeuten hohe Flexibilität.

Etchtest mit Schwefelsäure: Mit einer Pipette wurde ein 25 µm-Tropfen Schwefelsäure auf ein bei einer vorgegebenen Temperatur (hier 30 Minuten bei 80 oder 130 °C, s.

Tabellen 7 und 8) ausgehärteten Lacks auf einem Gradientenofenblechs gegeben und dieses im Gradientenofen 30 Minuten bei 30-75 °C geheizt. Das Blech wurde danach mit Wasser abgewaschen und getrocknet. Angegeben ist die niedrigste Temperatur bei der nach Augenschein eine Anätzung auf dem Lack festzustellen war.

**Tabelle 7: Pendelhärte, Erichsen-Tiefung, Gitterschnitt, Acetontest, Kratzfestigkeit und etch-Test nach 30 Minuten 80 °C-Härtung und 24 Stunden bei 23°C**

| Beispiel | 17F | 18F | Vgl. 3F |
|---|---|---|---|
| Gelzeit 23 °C[h:min] | 3:28 | 3:47 | 4:01 |
| Pendelhärte [Schläge] | 82 | 88 | 39 |
| Erichsen-Tiefung [mm] | >9,0 | >9,0 | >9,0 |
| Gitterschnitt [Note] | 1 | 1,5 | 5 |
| Acetontest [Doppelhübe] | >100 | >100 | >100 |
| Kratztest, Glanz direkt | 98 | 99 | 99 |
| Glanz nach 50 Doppelhüben | 9 | 20 | 5 |
| Glanz nach reflow | 9 | 27 | 6 |
| Etch-Test, erste Anätzung [°C] | 45,5 | 49,0 | 41,5 |

Erichsen-Tiefung und Acetontest sind bei allen Beispielen und dem Vergleichsbeispiel jeweils gleich.

Die Pendelhärte, der Kratztest nach 50 Doppelhüben und reflow, der Etch-Test und der Gitterschnitt der Beispiele 17F und 18F sind deutlich besser als die des mit DBTL gehärteten Lacks.

Bei den Versuchen der achten Serie wurde Joncryl® 911, ein acrylatbasiertes Polyol der BASF SE der OH-Zahl 70 mg KOH/g (77% in Butylacetat) mit dem 1,6-Hexamethylendiisocyanat-basierten Isocyanurat (Basonat® HI 100 der BASF SE, NCO-Gehalt 22,0%) in stöchiometrischem Verhältnis in einem pigmentierten System eingesetzt und mit Butylacetat auf eine Applikationsviskosität von 20 sec Auslaufzeit im DIN4-Becher eingestellt. Der nichtflüchtige Anteil betrug 70 %.

Für die Versuche wurde zuerst ein Stammlack einer Polyolkomponente angesetzt:

| Komponente | Menge (g) | Produktbeschreibung |
|---|---|---|
| | | |
| Joncryl 911 | 54,72 | acrylatbasiertes Polyol |
| BYK 320 | 0,29 | Lösung eines polyethermodifizierten Polymethylalkylsiloxans; Silikon-Oberflächenadditiv mit geringer Reduktion der Oberflächenspannung, BYK-Chemie GmbH |
| BYK 333 | 0,30 | Polyethermodifiziertes Polydimethylsiloxan; erhöht die Oberflächenglätte stark und verbessert deutlich die Untergrundbenetzung, BYK-Chemie GmbH |
| TiPure R 960 | 43,72 | Titandioxid für Lacke, Fa. DuPont |
| Butylacetat | 15,97 | |

Dieser wurde anschließend mit dem Polyisocyanat und Katalysator gemischt und gehärtet.

| Beispiel | 19 | 20 | Vgl. 5 |
|---|---|---|---|
| Komponente | Menge (g) | Menge (g) | Menge (g) |
| Katalysatormenge [%] | 0,225 | 0,175 | 0,0063 |
| | | | |
| Basonat HI 100 | 4,37 | 4,37 | 4,37 |
| EMIM Octanoat | 0,135 | | |
| 1,2,3,4,5-Pentamethyl-imidazolium-acetat (10 % in Aceton) | | 1,047 | |
| DBTL | | | 0,0374 |
| Stammlack | 50,00 | 50,00 | 50,00 |

In der folgenden Tabelle 8 sind Versuchsergebnisse mit den Produktzusammensetzungen und obigen Lacken nach 30 Minuten Härtung bei 60 °C und 24 Stunden bei Normklima 23/50 beschrieben.

**Tabelle 8: Gitterschnitt, Acetontest, Kratztest nach 30 Minuten Härtung bei 60 °C und 24 Stunden bei Normklima 23/50**

| Beispiel | 19 | 20 | Vgl. 5 |
|---|---|---|---|
| Gitterschnitt (Note) | 0 | 0 | 0 |
| Acetontest | 100 | 100 | 100 |
| Kratztest, Glanz direkt | 96 | 96 | 95 |
| Glanz nach 50 Doppelhüben | 22 | 17 | 12 |
| Glanz nach reflow | 23 | 17 | 15 |

Im Kratztest sind die beiden Beispiele besser. Gitterschnitt, Acetontest und Glanz der beiden Beispiele entsprechen dem des Vergleichsbeispiels mit DBTL.

In der folgenden Tabelle 9 sind Versuchsergebnisse mit den folgenden Produktzusammensetzungen bei Härtung bei Raumtemperatur bei Normklima 23/50 beschrieben.

| Beispiel | Vgl. 6 | Vgl. 7 | Vgl. 8 | 21 | 22 | 23 |
|---|---|---|---|---|---|---|
| Katalysatormenge [%] | 0,006 | 0,15 | 0,006 | 0,169 | 0,225 | 0,225 |
| Basonat HI 100 | 7,6 | 7,6 | 7,6 | 7,6 | 7,6 | 7,6 |
| DBTL (1 % in BuAc) | 0,024 | | 0,024 | | | |
| Tetrabutylammoniumacetat (10% in Aceton) | | 0,57 | | | | |
| 1-Ethyl-2,3-dimethyl-imidazolium-acetat (3% in Joncryl 507) | | | | 2,145 | | |
| 1,3-Diethyl-imidazolium-acetat (100 %) | | | | | 0,0857 | |
| 1,3-Diethyl-imidazolium-octanoat (100 %) | | | | | | 0,0857 |
| Joncry1507 | 20,00 | 20,00 | 20,00 | 17,85 | 20,00 | 20,00 |
| Butylacetat | 10,3 | 10,3 | 10,3 | 10,3 | 10,3 | 10,3 |
| Gelierzeit 23 °C [h:min] | 04:06 | 4:06 | | 3:29 | 3:31 | 4:33 |
| Wattetest [min] | >500 | 305 | | 235 | 225 | 290 |
| Sandtrockung [Stunden] | >24 | 6 | | 4,75 | 4,0 | 4,75 |
| Durchtrocknung [Stunden] | 25,25 | 5,25 | | 5,0 | 3,75 | 4,75 |
| Pendelhärte [Schläge]: | | | | | | |
| 5 Stunden | | | 2 | 11 | 10 | 9 |
| 6 Stunden | 2 | 4 | | | | |
| 24 Stunden | 15 | 45 | | | | |
| 2 Tage | | | 32 | 37 | 37 | 36 |

Die Referenz mit Tetrabutylammoniumacetat (Vgl. 7) ist in der Sand- und Durchtrocknung sehr schlecht im Vergleich zu DBTL (Vgl. 6) und den erfindungsgemäßen Beispielen der Tabelle 5.

1-Ethyl-2,3-dimethyl-imidazolium-acetat; 1,3-Diethyl-imidazolium-acetat und 1,3-Diethyl-imidazolium-octanoat sind gegenüber DBTL als Referenz besser in der Trockung und der frühen Pendelhärteentwicklung.

## Patentansprüche

1. Verfahren zur Beschichtung von Substraten mit Beschichtungsmassen, umfassend
- in einem ersten Schritt Aufbringen auf das Substrat in der gewünschten Stärke mindestens einer Beschichtungsmasse, enthaltend
- (A) mindestens ein Polyisocyanat, erhältlich durch Umsetzung mindestens eines monomeren Isocyanats,
- (B) mindestens eine Verbindung, die mindestens zwei gegenüber Isocyanat reaktive Gruppen, eine zahlenmittleres Molekulargewicht Mn von mindestens 1000 g/mol und eine OH-Zahl von 40 bis 350 mg KOH/g aufweist,
- (C) mindestens ein Imidazoliumsalz,
- (D) optional mindestens ein Lösungsmittel,
- (E) optional mindestens einen anderen Urethanisierungskatalysator als (C), sowie,
- (F) optional andere lacktypische Komponenten und/oder Additive, wobei das Imidazoliumsalz (C) die Formel 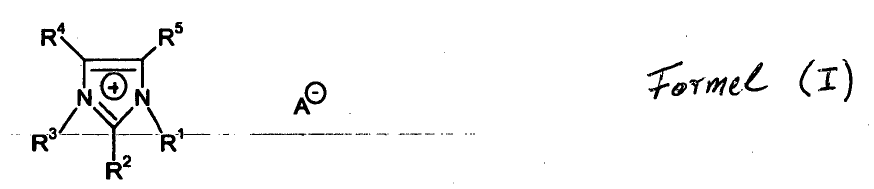 hat, worin R¹ und R³ unabhängig voneinander für einen organischen Rest mit 1 bis 20 C-Atomen stehen,
R⁴ und R⁵ unabhängig voneinander für ein H-Atom oder einen organischen Rest mit bis zu 20 C-Atomen stehen,
R² Wasserstoff oder eine C₁- bis C₁₈-Alkylgruppe bedeutet und A- für ein Anion steht,
- optional Trocknen der auf das Substrat aufgebrachten Beschichtungsmasse durch zumindest teilweises Entfernen flüchtiger Bestandteile, gefolgt von
- Härten der auf das Substrat aufgebrachten Beschichtungsmasse.

2. Verfahren gemäß Anspruch 1, **dadurch gekennzeichnet, daß** es sich bei dem Polyisocyanat (A) um eine (cyclo)aliphatisches Polyisocyanat handelt.

3. Verfahren gemäß Anspruch 1 oder 2, **dadurch gekennzeichnet, daß** das Polyisocyanat (A) ausgewählt ist aus der Gruppe bestehend aus Isocyanuraten, Biureten, Urethanen und Allophanaten.

4. Verfahren gemäß einem der vorstehenden Ansprüche, **dadurch gekennzeichnet, daß** das Bindemittel (B) ausgewählt aus der Gruppe bestehend aus Polyacrylatpolyolen, Polyesterpolyolen, Polyurethanpolyolen, Polycarbonatpolyolen und Polyetherpolyolen.

5. Verfahren gemäß einem der vorstehenden Ansprüche, **dadurch gekennzeichnet, daß** im Imidazoliumion (C) die Reste R¹ und R³ unabhängig voneinander für eine Methyl-, Ethyl-, iso-Propyl-, n-Propyl- oder n-Butylgruppe stehen.

6. Verfahren gemäß einem der vorstehenden Ansprüche, **dadurch gekennzeichnet, dass** im Imidazoliumion (C) die Reste R², R⁴ und R⁵ unabhängig voneinander für ein Wasserstoffatom oder eine C₁ bis C₁₀ Alkylgruppe stehen.

7. Verfahren gemäß einem der vorstehenden Ansprüche, **dadurch gekennzeichnet, daß** im Imidazoliumion (C) die Reste R¹ bis R⁵ unabhängig voneinander für eine C₁ bis C₁₀ Alkylgruppe stehen.

8. Verfahren gemäß einem der vorstehenden Ansprüche, **dadurch gekennzeichnet, daß** in Formel (I) das Anion A⁻ ausgewählt ist aus der Gruppe bestehend aus Acetat, Propionat, iso-Propanoat, 2,2-Dimethylpropionat, n-Butanoat, iso-Butanoat, sek-Butanoat, tert-Butanoat, n-Pentanoat, n-Hexanoat, n-Heptanoat, n-Octanoat, iso-Octanoat, n-Nonanoat, iso-Nonanoat, n-Decanoat, n-Dodecanoat, Tetradecanoat, Hexadecanoat, Stearat und n-Eicosanoat.

9. Verfahren gemäß einem der vorstehenden Ansprüche, **dadurch gekennzeichnet, daß** das Lösungsmittel (D) anwesend ist und ausgewählt ist aus der Gruppe bestehend aus Estern, Alkoxyestern und/oder aromatischen Lösungsmitteln.

10. Verfahren gemäß einem der vorstehenden Ansprüche, **dadurch gekennzeichnet, daß** eine Vormischung enthaltend
- (A) mindestens ein Polyisocyanat, erhältlich durch Umsetzung mindestens eines monomeren Isocyanats,
- (C) mindestens ein Imidazoliumsalz gemäß einem der Ansprüche 1 oder 5 bis 8,
- (D) optional mindestens ein Lösungsmittel,
- (E) optional mindestens einen anderen Urethanisierungskatalysator als (C), sowie,
- (F) optional andere lacktypische Komponenten und/oder Additive,
- optional mindestens ein Stabilisator ausgewählt aus der Gruppe bestehend aus sterisch gehinderte Phenolen, Phosphiten, Phosphoniten, Phosphonaten, sekundären aromatischen Aminen und Bronsted-Säuren kurz vor dem Aufbringen auf das Substrat vermischt wird mit
- (B) mindestens eine Verbindung, die mindestens zwei gegenüber Isocyanat reaktive Gruppen, eine zahlenmittleres Molekulargewicht Mn von mindestens 1000 g/mol und eine OH-Zahl von 40 bis 350 mg KOH/g aufweist,
und anschließend
- optional Trocknen der auf das Substrat aufgebrachten Beschichtungsmasse durch zumindest teilweises Entfernen flüchtiger Bestandteile, gefolgt von
- Härten der auf das Substrat aufgebrachten Beschichtungsmasse erfolgt.

11. Verfahren gemäß einem der Ansprüche 1 bis 9, **dadurch gekennzeichnet, daß** eine Vormischung enthaltend
- (B) mindestens eine Verbindung, die mindestens zwei gegenüber Isocyanat reaktive Gruppen, eine zahlenmittleres Molekulargewicht Mn von mindestens 1000 g/mol und eine OH-Zahl von 40 bis 350 mg KOH/g aufweist,
- (C) mindestens ein Imidazoliumsalz gemäß einem der Ansprüche 1 oder 5 bis 8,
- (D) optional mindestens ein Lösungsmittel,
- (E) optional mindestens einen anderen Urethanisierungskatalysator als (C), sowie,
- (F) optional andere lacktypische Komponenten und/oder Additive, kurz vor dem Aufbringen auf das Substrat vermischt wird mit
- (A) mindestens ein Polyisocyanat, erhältlich durch Umsetzung mindestens eines monomeren Isocyanats,
und anschließend
- optional Trocknen der auf das Substrat aufgebrachten Beschichtungsmasse durch zumindest teilweises Entfernen flüchtiger Bestandteile, gefolgt von
- Härten der auf das Substrat aufgebrachten Beschichtungsmasse erfolgt.

12. Lack als Mittel zur Beschichtung eines Substrats nach einem Verfahren gemäß einem der vorstehenden Ansprüche, enthaltend
- (A) mindestens ein Polyisocyanat, erhältlich durch Umsetzung mindestens eines monomeren Isocyanats,
- (B) mindestens eine Verbindung, die mindestens zwei gegenüber Isocyanat reaktive Gruppen, eine zahlenmittleres Molekulargewicht Mn von mindestens 1000 g/mol und eine OH-Zahl von 40 bis 350 mg KOH/g aufweist,
- (C) mindestens ein Imidazoliumsalz gemäß einem der Ansprüche 1 oder 5 bis 8,
- (D) optional mindestens ein Lösungsmittel,
- (E) optional mindestens einen anderen Urethanisierungskatalysator als (C), sowie,
- (F) optional andere lacktypische Komponenten und/oder Additive.

13. Vormischung als Mittel zur Beschichtung eines Substrats nach einem Verfahren gemäß Anspruch 10, enthaltend
- (A) mindestens ein Polyisocyanat, erhältlich durch Umsetzung mindestens eines monomeren Isocyanats,
- (C) mindestens ein Imidazoliumsalz gemäß einem der Ansprüche 1 oder 5 bis 8,
- (D) optional mindestens ein Lösungsmittel,
- (E) optional mindestens einen anderen Urethanisierungskatalysator als (C), sowie,
- (F) optional andere lacktypische Komponenten und/oder Additive.

14. Vormischung als Mittel zur Beschichtung eines Substrats nach einem Verfahren gemäß Anspruch 11, enthaltend
- (B) mindestens eine Verbindung, die mindestens zwei gegenüber Isocyanat reaktive Gruppen, eine zahlenmittleres Molekulargewicht Mn von mindestens 1000 g/mol und eine OH-Zahl von 40 bis 350 mg KOH/g aufweist,
- (C) mindestens ein Imidazoliumsalz gemäß einem der Ansprüche 1 oder 5 bis 8,
- (D) optional mindestens ein Lösungsmittel,
- (E) optional mindestens einen anderen Urethanisierungskatalysator als (C), sowie,
- (F) optional andere lacktypische Komponenten und/oder Additive.

15. Verwendung von Imidazoliumionen gemäß Formel (I) wie definiert in Anspruch 1 oder 5 bis 8 als Katalysatoren für die Härtung von Beschichtungsmassen, enthaltend mindestens ein Polyisocyanat und mindestens eine Verbindung, die gegenüber Isocyanat reaktive Gruppen aufweist.

## Claims

1. A method of coating a substrate with coating composition, comprising
- in a first step applying to the substrate in the desired thickness at least one coating composition comprising
- (A) at least one polyisocyanate obtainable by reacting at least one monomeric isocyanate,
- (B) at least one compound which has at least two isocyanate-reactive groups, a number-average molecular weight Mn of at least 1000 g/mol, and an OH number of 40 to 350 mg KOH/g,
- (C) at least one imidazolium salt,
- (D) optionally at least one solvent,
- (E) optionally at least one urethanization catalyst other than (C), and
- (F) optionally other, typical coatings components and/or additives,
said imidazolium salt (C) having the formula 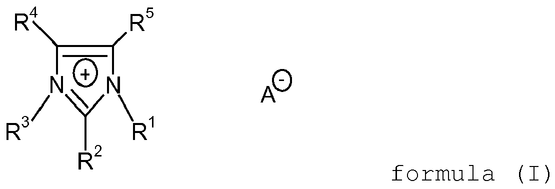 in which R¹ and R³ independently of one another are an organic radical having 1 to 20 C atoms,
R⁴ and R⁵ independently of one another are an H atom or an organic radical having up to 20 C atoms,
R₂ is hydrogen or a C₁ to C₁₈ alkyl group and A⁻ is an anion,
- optionally drying the coating composition applied to the substrate, by at least partly removing volatile constituents, followed by
- curing the coating composition applied to the substrate.

2. The method according to claim 1, wherein said polyisocyanate (A) is a (cyclo)aliphatic polyisocyanate.

3. The method according to claim 1 or 2, wherein said polyisocyanate (A) is selected from the group consisting of isocyanurates, biurets, urethanes, and allophanates.

4. The method according to any of the preceding claims, wherein said binder (B) is selected from the group consisting of polyacrylate polyols, polyester polyols, polyurethane polyols, polycarbonate polyols, and polyether polyols.

5. The method according to any of the preceding claims, wherein the radicals R¹ and R³ in the imidazolium ion (C) are independently of one another a methyl, ethyl, isopropyl, n-propyl or n-butyl group.

6. The method according to any of the preceding claims, wherein the radicals R², R⁴, and R⁵ in the imidazolium ion (C) are independently of one another a hydrogen atom or a C₁ to C₁₀ alkyl group.

7. The method according to any of the preceding claims, wherein the radicals R¹ to R⁵ in the imidazolium ion (C) are independently of one another a C₁ to C₁₀ alkyl group.

8. The method according to any of the preceding claims, wherein the anion A⁻ in formula (I) is selected from the group consisting of acetate, propionate, isopropanoate, 2,2-dimethylpropionate, n-butanoate, isobutanoate, sec-butanoate, tert-butanoate, n-pentanoate, n-hexanoate, n-heptanoate, n-octanoate, isooctanoate, n-nonanoate, isononanoate, n-decanoate, n-dodecanoate, tetradecanoate, hexadecanoate, stearate, and n-eicosanoate.

9. The method according to any of the preceding claims, wherein the solvent (D) is present and is selected from the group consisting of esters, alkoxyesters and/or aromatic solvents.

10. The method according to any of the preceding claims, wherein a premix comprising
- (A) at least one polyisocyanate obtainable by reacting at least one monomeric isocyanate,
- (C) at least one imidazolium salt according to any of claims 1 and 5 to 8,
- (D) optionally at least one solvent,
- (E) optionally at least one urethanization catalyst other than (C), and
- (F) optionally other, typical coatings components and/or additives,
- optionally at least one stabilizer selected from the group consisting of sterically hindered phenols, phosphites, phosphonites, phosphonates, secondary aromatic amines, and Bronsted acids is mixed, shortly before application to the substrate, with
- (B) at least one compound which has at least two isocyanate-reactive groups, a number-average molecular weight Mn of at least 1000 g/mol, and an OH number of 40 to 350 mg KOH/g,
and, subsequently,
- optionally drying of the coating composition applied to the substrate, by at least partly removing volatile constituents, followed by
- curing of the coating composition applied to the substrate.

11. The method according to any of claims 1 to 9, wherein a premix comprising
- (B) at least one compound which has at least two isocyanate-reactive groups, a number-average molecular weight Mn of at least 1000 g/mol, and an OH number of 40 to 350 mg KOH/g,
- (C) at least one imidazolium salt according to any of claims 1 and 5 to 8,
- (D) optionally at least one solvent,
- (E) optionally at least one urethanization catalyst other than (C), and
- (F) optionally other, typical coatings components and/or additives,
is mixed, shortly before application to the substrate, with
- (A) at least one polyisocyanate obtainable by reacting at least one monomeric isocyanate,
and, subsequently,
- optionally drying of the coating composition applied to the substrate, by at least partly removing volatile constituents, followed by
- curing of the coating composition applied to the substrate.

12. A coating material as material for coating a substrate by a method according to any of the preceding claims, comprising
- (A) at least one polyisocyanate obtainable by reacting at least one monomeric isocyanate,
- (B) at least one compound which has at least two isocyanate-reactive groups, a number-average molecular weight Mn of at least 1000 g/mol, and an OH number of 40 to 350 mg KOH/g,
- (C) at least one imidazolium salt according to any of claims 1 and 5 to 8,
- (D) optionally at least one solvent,
- (E) optionally at least one urethanization catalyst other than (C), and
- (F) optionally other, typical coatings components and/or additives.

13. A premix as material for coating a substrate by a method according to claim 10, comprising
- (A) at least one polyisocyanate obtainable by reacting at least one monomeric isocyanate,
- (C) at least one imidazolium salt according to any of claims 1 and 5 to 8,
- (D) optionally at least one solvent,
- (E) optionally at least one urethanization catalyst other than (C), and
- (F) optionally other, typical coatings components and/or additives.

14. A premix as material for coating a substrate by a method according to claim 11, comprising
- (B) at least one compound which has at least two isocyanate-reactive groups, a number-average molecular weight Mn of at least 1000 g/mol, and an OH number of 40 to 350 mg KOH/g,
- (C) at least one imidazolium salt according to any of claims 1 and 5 to 8,
- (D) optionally at least one solvent,
- (E) optionally at least one urethanization catalyst other than (C), and
- (F) optionally other, typical coatings components and/or additives.

15. The use of an imidazolium ion of formula (I) as defined in claim 1 or 5 to 8 as a catalyst for curing coating compositions comprising at least one polyisocyanate and at least one compound which has isocyanate-reactive groups.

## Revendications

1. Procédé pour le revêtement de substrats par des masses de revêtement, comprenant :
- dans une première étape, l'application sur le substrat, dans l'épaisseur souhaitée, d'au moins une masse de revêtement, contenant
- (A) au moins un polyisocyanate, pouvant être obtenu par transformation d'au moins un isocyanate monomère,
- (B) au moins un composé, qui présente au moins deux groupes réactifs par rapport à isocyanate, un poids moléculaire numérique moyen Mₙ d'au moins 1000 g/mole et un indice OH de 40 à 350 mg de KOH/g,
- (C) au moins un sel d'imidazolium,
- (D) éventuellement au moins un solvant,
- (E) éventuellement au moins un autre catalyseur d'uréthanisation que (C) ainsi que
- (F) éventuellement d'autres composants et/ou additifs caractéristiques des laques,
le sel d'imidazolium (C) présentant la formule 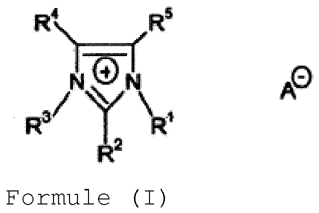 dans laquelle
R₁ et R³ représentent, indépendamment l'un de l'autre, un radical organique comprenant 1 à 20 atomes de carbone,
R⁴ et R⁵ représentent, indépendamment l'un de l'autre, un atome d'hydrogène ou un radical organique comprenant jusqu'à 20 atomes de carbone,
R² signifie hydrogène ou un groupe C₁-C₁₈-alkyle et A⁻ représente un anion,
- éventuellement le séchage de la masse de revêtement appliquée sur le substrat par l'élimination au moins partielle de constituants volatils, suivi du
- durcissement de la masse de revêtement appliquée sur le substrat.

2. Procédé selon la revendication 1, **caractérisé en ce qu'**il s'agit, pour le polyisocyanate (A), d'un polyisocyanate (cyclo)aliphatique.

3. Procédé selon la revendication 1 ou 2, **caractérisé en ce que** le polyisocyanate (A) est choisi dans le groupe constitué par les isocyanurates, les biurets, les uréthanes et les allophanates.

4. Procédé selon l'une quelconque des revendications précédentes, **caractérisé en ce que** le liant (B) est choisi dans le groupe constitué par les polyacrylatepolyols, les polyesterpolyols, les polyuréthanepolyols, les polycarbonatepolyols et les polyétherpolyols.

5. Procédé selon l'une quelconque des revendications précédentes, **caractérisé en ce que** dans l'ion d'imidazolium (C), les radicaux R¹ et R³ représentent, indépendamment l'un de l'autre, un groupe méthyle, éthyle, iso-propyle, n-propyle ou n-butyle.

6. Procédé selon l'une quelconque des revendications précédentes, **caractérisé en ce que**, dans l'ion d'imidazolium (C), les radicaux R², R⁴ et R⁵ représentent, indépendamment les uns des autres, un atome d'hydrogène ou un groupe C₁-C₁₀-alkyle.

7. Procédé selon l'une quelconque des revendications précédentes, **caractérisé en ce que**, dans l'ion d'imidazolium (C), les autres radicaux R¹ à R⁵ représentent, indépendamment les uns des autres, un groupe alkyle en C₁-C₁₀.

8. Procédé selon l'une quelconque des revendications précédentes, **caractérisé en ce que** dans la formule (I), l'anion A⁻ est choisi dans le groupe constitué par l'acétate, le propionate, l'iso-propanoate, le 2,2-diméthylpropionate, le n-butanoate, l'iso-butanoate, le sec-butanoate, le tert-butanoate, le n-pentanoate, le n-hexanoate, le n-heptanoate, le n-octanoate, l'iso-octanoate, le n-nonanoate, l'iso-nonanoate, le n-décanoate, le n-dodécanoate, le tétradécanoate, l'hexadécanoate, le stéarate et le n-eicosanoate.

9. Procédé selon l'une quelconque des revendications précédentes, **caractérisé en ce que** le solvant (D) est présent et est choisi dans le groupe constitué par les esters, les alcoxyesters et/ou les solvants aromatiques.

10. Procédé selon l'une quelconque des revendications précédentes, **caractérisé en ce qu'**un prémélange, contenant
- (A) au moins un polyisocyanate, pouvant être obtenu par transformation d'au moins un isocyanate monomère,
- (C) au moins un sel d'imidazolium selon l'une quelconque des revendications 1 ou 5 à 8,
- (D) éventuellement au moins un solvant,
- (E) éventuellement au moins un autre catalyseur d'uréthanisation que (C) ainsi que
- (F) éventuellement d'autres composants et/ou additifs caractéristiques des laques,
- éventuellement au moins un stabilisant choisi dans le groupe constitué par les phénols stériquement encombrés, les phosphites, les phosphonites, les phosphonates, les amines aromatiques secondaires et les acides de Brönsted est mélangé peu avant l'application sur le substrat avec
- (B) au moins un composé, qui présente au moins deux groupes réactifs par rapport à isocyanate, un poids moléculaire numérique moyen Mₙ d'au moins 1000 g/mole et un indice OH de 40 à 350 mg de KOH/g,
puis
- on sèche éventuellement la masse de revêtement appliquée sur le substrat par l'élimination au moins partielle de constituants volatils, puis
- on durcit la masse de revêtement appliquée sur le substrat.

11. Procédé selon l'une quelconque des revendications 1 à 9, **caractérisé en ce qu'**un prémélange, contenant
- (B) au moins un composé, qui présente au moins deux groupes réactifs par rapport à isocyanate, un poids moléculaire numérique moyen Mₙ d'au moins 1000 g/mole et un indice OH de 40 à 350 mg de KOH/g,
- (C) au moins un sels d'imidazolium selon l'une quelconque des revendications 1 ou 5 à 8,
- (D) éventuellement au moins un solvant,
- (E) éventuellement au moins un autre catalyseur d'uréthanisation que (C) ainsi que
- (F) éventuellement d'autres composants et/ou additifs caractéristiques des laques est mélangé peu avant l'application sur le substrat avec
- (A) au moins un polyisocyanate, pouvant être obtenu par transformation d'au moins un isocyanate monomère,
puis
- on sèche éventuellement la masse de revêtement appliquée sur le substrat par l'élimination au moins partielle de constituants volatils, puis
- on durcit la masse de revêtement appliquée sur le substrat.

12. Laque comme agent pour le revêtement d'un substrat selon un procédé selon l'une quelconque des revendications précédentes, contenant
- (A) au moins un polyisocyanate, pouvant être obtenu par transformation d'au moins un isocyanate monomère,
- (B) au moins un composé, qui présente au moins deux groupes réactifs par rapport à isocyanate, un poids moléculaire numérique moyen Mₙ d'au moins 1000 g/mole et un indice OH de 40 à 350 mg de KOH/g,
- (C) au moins un sels d'imidazolium selon l'une quelconque des revendications 1 ou 5 à 8,
- (D) éventuellement au moins un solvant,
- (E) éventuellement au moins un autre catalyseur d'uréthanisation que (C) ainsi que
- (F) éventuellement d'autres composants et/ou additifs caractéristiques des laques.

13. Prémélange comme agent pour le revêtement d'un substrat selon un procédé selon la revendication 10, contenant
- (A) au moins un polyisocyanate, pouvant être obtenu par transformation d'au moins un isocyanate monomère,
- (C) au moins un sels d'imidazolium selon l'une quelconque des revendications 1 ou 5 à 8,
- (D) éventuellement au moins un solvant,
- (E) éventuellement au moins un autre catalyseur d'uréthanisation que (C) ainsi que
- (F) éventuellement d'autres composants et/ou additifs caractéristiques des laques.

14. Prémélange comme agent pour le revêtement d'un substrat selon un procédé selon la revendication 11, contenant
- (B) au moins un composé, qui présente au moins deux groupes réactifs par rapport à isocyanate, un poids moléculaire numérique moyen Mₙ d'au moins 1000 g/mole et un indice OH de 40 à 350 mg de KOH/g,
- (C) au moins un sels d'imidazolium selon l'une quelconque des revendications 1 ou 5 à 8,
- (D) éventuellement au moins un solvant,
- (E) éventuellement au moins un autre catalyseur d'uréthanisation que (C) ainsi que
- (F) éventuellement d'autres composants et/ou additifs caractéristiques des laques.

15. Utilisation d'ions d'imidazolium selon la formule (I) telle que définie dans la revendication 1 ou 5 à 8, comme catalyseurs pour le durcissement de masses de revêtement, contenant au moins un polyisocyanate et au moins un composé qui présente des groupes réactifs par rapport à isocyanate.
